# EUROPÄISCHE PATENTSCHRIFT

(11) **EP 1 114 571 B1**
(45) Veröffentlichungstag und Bekanntmachung des Hinweises auf die Patenterteilung: **31.07.2002**
(21) Anmeldenummer: 99941643.1
(22) Anmeldetag: 19.08.1999
(51) Int. Cl.: H05B 41/38, H05B 41/28

(54) **SCHALTUNGSANORDNUNG ZUM BETREIBEN VON GASENTLADUNGSLAMPEN**
CIRCUIT FOR OPERATING GAS DISCHARGE LAMPS
CIRCUIT POUR FAIRE FONCTIONNER DES LAMPES A DECHARGE DANS UN GAZ

(30) Priorität: 18.09.1998 DE 19842853; 14.04.1999 DE 19916878
(43) Veröffentlichungstag der Anmeldung: 11.07.2001
(73) Patentinhaber: KNOBEL AG LICHTTECHNISCHE KOMPONENTEN, CH-8755 Ennenda (CH)
(72) Erfinder: RAST, Urs, CH-8753 Näfels (CH); HUBER, Martin, CH-8610 Uster (CH); TOBLER, Felix, CH-8718 Schänis (CH)
(74) Vertreter: Schmidt-Evers, Jürgen, Dipl.-Ing.
(86) Internationale Anmeldenummer: EP9906085
(87) Internationale Veröffentlichungsnummer: WO0018197

(56) Entgegenhaltungen:
- EP-A- 0 314 077
- EP-A- 0 553 923
- DE-A- 2 936 088
- DE-A- 3 623 306
- DE-A- 4 412 518

## Beschreibung

Die vorliegende Erfindung betrifft eine Schaltungsanordnung zum Betreiben von Gasentladungslampen, insbesondere von Hochdruck-Gasentladungslampen, welche in elektronischen Vorschaltgeräten für entsprechende Gasentladungslampen zum Einsatz kommt.

Hochdruck-Gasentladungslampen unterscheiden sich von Niederdruck-Gasentladungslampen unter anderem dadurch, daß sie höhere Zündspannungen benötigen und sich ihre Farbtemperatur mit der jeweils zugeführten Lampenleistung ändert. Die letztgenannte Eigenschaft hat zur Folge, daß Hochdruck-Gasentladungslampen nur schwer oder nicht dimmbar sind. Vielmehr muß zur Erhaltung der Farbtemperatur der Hochdruck-Gasentladungslampe die der jeweiligen Lampe zugeführte Energie durch eine entsprechende Regelung konstant gehalten werden. Ein elektronisches Vorschaltgerät für Hochdruck-Gasentladungslampen muß demnach zum einen eine hohe Zündspannung erzeugen und zum anderen die Möglichkeit bieten, die der Lampe zugeführte Leistung konstant zu halten.

Bekannte elektronische Vorschaltgeräte für Hochdruck-Gasentladungslampen basieren auf einer Vollbrückenschaltung, die vier steuerbare elektronische Schalter umfaßt. Dieses Prinzip soll nachfolgend anhand Fig. 4 erläutert werden, wobei die in Fig. 4 gezeigte Schaltung beispielsweise aus der WO-A-86/04752 bekannt ist.

Wie bereits erwähnt worden ist, umfaßt diese bekannte Schaltung zum Ansteuern einer Gasentladungslampe EL, insbesondere einer Hochdruck-Gasentladungslampe, eine Vollbrücke mit vier steuerbaren Schaltern S1 - S4, die gemäß der zuvor genannten Druckschrift insbesondere durch Bipolartransistoren gebildet sind. In dem Brückenzweig dieser Vollbrücke ist ein Serienresonanzkreis bestehend aus einer Spule L1 und einem Kondensator C1 geschaltet, wobei die anzusteuernde Gasentladungslampe EL parallel zu dem Kondensator C1 angeordnet ist. Die Vollbrücke wird mit einer Gleichspannung U₀ gespeist. Zu den Schaltern bzw. Transistoren S1 - S4 sind Freilaufdioden parallel geschaltet, die jedoch der Einfachheit halber in Fig. 4 nicht dargestellt sind. Zum Betreiben der Gasentladungslampe EL wird in der WO-A-86/04752 vorgeschlagen, während einer ersten Betriebsphase den Schalter S4 zu schließen und die Schalter S2 und S3 zu öffnen. Des weiteren wird während dieser ersten Betriebsphase der Schalter S1 mit einer hohen Taktfrequenz abwechselnd einund ausgeschaltet. Während derEinschaltdauer des Schalters S1 fließt ein Gleichstrom über den Schalter S1, die Spule bzw. Drossel L1, die Gasentladungslampe EL und den während dieser Betriebsphase stets geschlossenen Schalter S4. Durch Öffnen des Transistors S1 wird der Stromfluß unterbrochen und die in der Spule L1 durch den Stromfluß zuvor aufgebaute magnetische Energie in elektrische Energie umgesetzt, die eine Gegenspannung liefert, welche bis zum nächsten Einschaltzeitpunkt des Schalters S1 den Stromfluß durch die Gasentladungslampe EL in gleicher Richtung aufrecht erhält, wobei die in der Spule L1 gespeicherte Energie abgebaut wird. Durch erneutes Einschalten des Schalters S1 wird erneut der zuvor beschriebene Stromkreis geschlossen, so daß sich der oben erwähnte Vorgang wiederholt. Während dieser ersten Betriebsphase, in der die Schalter S2 und S3 dauerhaft geöffnet und der Schalter S4 dauerhaft geschlossen ist und der Schalter S1 hochfrequent abwechselnd geöffnet und geschlossen wird, wird die Gasentladungslampe EL stets in gleicher Richtung vom Strom durchflossen. Dies führt dazu, daß die Gasentladungslampe EL während ihres Betriebs weniger flackert und eine höhere Lichtausbeute möglich ist. Beim dauerhaften Betrieb mit der Gleichspannung U₀ können sich jedoch im Elektrodenbereich der Gasentladungslampe EL Ablagerungen ansammeln, welche durch den stets in gleiche Richtung strömenden Elektronenfluß verursacht werden. Um diese Ablagerungen zu vermeiden, wird die Gasentladungslampe EL wiederholt niederfrequent umgepolt. Dies geschieht dadurch, daß während einer zweiten Betriebsphase nunmehr die Schalter bzw. Transistoren S1 und S4 dauerhaft geöffnet und der Schalter S3 dauerhaft geschlossen wird. Des weiteren wird während dieser zweiten Betriebsphase der Schalter S2 hochfrequent abwechselnd ein- und ausgeschaltet, so daß sich im Prinzip dieselbe Betriebsweise wie während der zuvor beschriebenen ersten Betriebsphase einstellt, wobei jedoch während der zweiten Betriebsphase der Stromfluß durch die Gasentladungslampe EL umgekehrt ist.

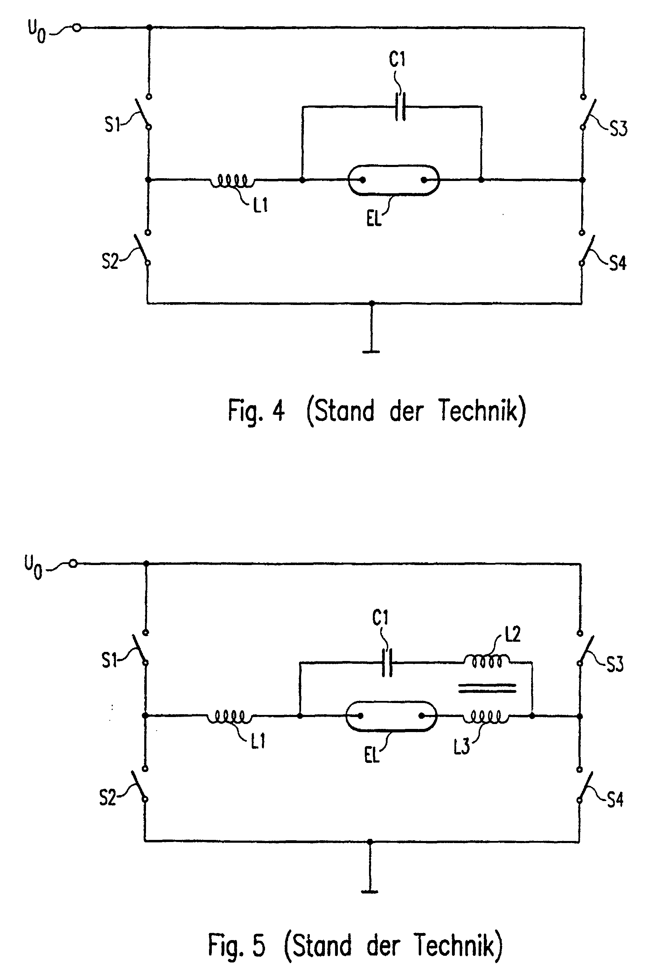

Zusammenfassend kann demnach festgestellt werden, daß die in Fig. 4 gezeigt Vollbrücke im Prinzip mit der Gleichspannung U₀ betrieben wird, wobei jedoch durch das niederfrequente Umpolen zwischen den Brückendiagonalen S1 - S4 bzw. S2 - S3, d.h. durch das niederfrequente Umschalten zwischen den beiden zuvor beschriebenen ersten und zweiten Betriebsphasen, der Gasentladungslampe EL und der Drossel L1 ein niederfrequenter Wechselstrom zugeführt wird, dessen Frequenz der Umpolfrequenz entspricht. Während der beiden Betriebsphasen wird entweder der Schalter S1 oder der Schalter S2 hochfrequent abwechselnd ein- und ausgeschaltet. Das Größenverhältnis zwischen der Taktfrequenz, mit der die Schalter S1 bzw. S2 abwechselnd ein- und ausgeschaltet werden, und der deutlich niedrigeren Umpolfrequenz sollte möglichst groß gewählt werden, und kann beispielsweise 1000:1 betragen. Je größer dieses Verhältnis ist, umso kleiner kann die Drossel bzw. Spule L1 dimensioniert werden. Aufgrund des hochfrequenten Umschaltens der Schalter S1 bzw. S2 wird ein entsprechend hochfrequenter Strom erzeugt, der durch die Drossel L1 fließt. Die zur Begrenzung des Lampenstroms dienende Drossel kann daher kleiner dimensioniert werden als im Fall, wenn sie von einem niederfrequenten Strom durchflossen werden würde.

Das Zünden der in Fig. 4 gezeigten Gasentladungslampe EL erfolgt mit Hilfe des durch die Drossel L1 und den Kondensator C1 gebildeten Serienresonanzkreises, wobei zum Zünden ein Betrieb der Gasentladungslampe EL mit einer Frequenz erforderlich ist, die in der Nähe der Resonanzfrequenz des Serienresonanzkreises liegt. Ist dies der Fall, tritt an der Gasentladungslampe EL eine Spannungsüberhöhung auf, die zum Zünden der Gasentladungslampe führt.

Aus der EP-A2-0740 492 ist eine ähnliche Schaltungsanordnung zum Zünden und Betreiben einer Gasentladungslampe, insbesondere einer Hochdruck-Gasentladungslampe, bekannt. Zum Zünden bzw. Betreiben der Gasentladungslampe wird in dieser Druckschrift vorgeschlagen, mit Hilfe einer entsprechenden Steuerschaltung die in den Brückendiagonalen angeordneten Schalter S1, S4 bzw. S2, S3 der Vollbrücke während einer ersten Betriebsphase komplementär mit einer relativ hohen Frequenz zu steuern, bis die Gasentladungslampe zündet. Anschließend schaltet die Steuerschaltung in eine zweite Betriebsphase (Nominalbetriebsphase) um, in der die Steuerschaltung die Schalter S1 - S4 der Vollbrückenanordnung komplementär mit einer relativ niedrigen Frequenz ansteuert. Zudem wird gemäß dieser Druckschrift eine Regeleinrichtung verwendet, die ausgangsseitig über eine Kapazität mit der Vollbrücke derart gekoppelt ist, daß die Vollbrücke parallel zu der Kapazität angeordnet ist. Die Regeleinrichtung dient zudem zur Spannungsversorgung der Vollbrücke und regelt insbesondere die der Gasentladungslampe zugeführte Leistung. Zu diesem Zweck wird die an den Ausgangsklemmen der Regeleinrichtung anliegende Spannung sowie der augenblicklich fließende Strom gemessen, die entsprechenden Werte werden multipliziert und der gebildete Istwert als Istwert der Lampenleistung der Regeleinrichtung zugeführt. Die zuvor erwähnte Steuerschaltung ist mit der Regeleinrichtung verbunden und gibt den Sollwert der Ausgangsleistung der Regeleinrichtung vor, wobei die Steuerschaltung insbesondere während der oben beschriebenen ersten Betriebsphase (Anlaufbetriebsphase) den Sollwert anhebt, damit die Regeleinrichtung der Vollbrücke eine höhere Ausgangsleistung zuführen kann. Die Zündung der Gasentladungslampe kann durch eine Zündvorrichtung erfolgen, die mit der im Brückenzweig angeordneten Induktivität L1 gekoppelt ist. Alternativ kann die Gasentladungslampe durch Verwendung der in Fig. 4 gezeigten und der Gasentladungslampe EL parallel geschalteten Kapazität C1 gezündet werden, die zusammen mit der Induktivität L1 einen Serienresonanzkreis bildet.

Eine weitere Schaltungsanordnung zum Zünden und Betreiben von Gasentladungslampen, insbesondere von Metallhalogen-Hochdruck-Gasentladungslampen, die aus der GB-A-2319 677 bekannt ist, ist in Fig. 5 dargestellt. Auch diese Schaltungsanordnung umfaßt vier zu einer Vollbrücke verschaltete steuerbare Schalter S1 - S4, die durch Bipolartransistoren oder Feldeffekttransistoren gebildet sein können. Im Brückenzweig dieser Vollbrückenschaltung befindet sich eine Gasentladungslampe EL sowie ein durch eine Induktivität L1 und eine Kapazität C1 gebildeter Serienresonanzkreis. Zum Starten, d.h. Zünden, der Gasentladungslampe EL wird die Vollbrücke mit Hilfe einer entsprechenden Steuerschaltung, welche die einzelnen Schalter S1 - S4 über entsprechende Brückentreiber einzeln ansteuern kann, mit einer relativ hohen Frequenz betrieben, die im Bereich 20 - 40 kHz liegen kann. Diese hohe Frequenz ist insbesondere derart gewählt, daß sie in der Nähe der Resonanzfrequenz des Serienresonanzkreises, bestehend aus der Induktivität L1 und der Kapazität C1, liegt, so daß nach einer gewissen Zeit die Gasentladungslampe EL zündet. Das Zünden der Gasentladungslampe El kann beispielsweise durch Überwachen des Lampenstroms oder durch Überwachen der Lampenhelligkeit erfaßt werden. Sobald die Zündung der Gasentladungslampe EL erfaßt worden ist, wird die Vollbrücke auf eine niedrige Betriebsfrequenz, die insbesondere im Bereich 50 - 200 Hz liegen kann, umgeschaltet, um die Lampe zu betreiben. Wie Fig. 5 entnommen werden kann, umfaßt die aus dieser Druckschrift bekannte Schaltungsanordnung zudem einen als Zünd- oder Spartransformator bezeichneten Transformator, dessen Primärwicklung L2 in Serie mit der Kapazität C1 des Serienresonanzkreises angeordnet ist, während die Sekundärwicklung in Serie mit der Gasentladungslampe EL geschaltet ist. Dieser Transformator mit den Induktivitäten L2 und L3 dient dazu, bei Auftreten eines Stromflusses durch den Kondensator C1 (was insbesondere bei Anliegen der hohen Zündfrequenz der Fall ist) eine erhöhte Spannung in der Sekundärspule L3 zu erzeugen, die an die Gasentladungslampe EL angelegt wird. Auf diese Weise kann das Zünden sowie der Betrieb der Gasentladungslampe EL erleichtert werden.

Die in Fig. 5 gezeigte Schaltungsanordnung, bei der ein Spartransformator verwendet wird, dessen Primärwicklung L2 in Serie mit der Serienresonanzkreiskapazität C1 und dessen Sekundärwicklung L3 in Serie mit der Gasentladungslampe EL geschaltet ist, hat jedoch den Nachteil, daß auch ein durch die Vollbrücke fließender Rippelstrom hochtransformiert wird und dementsprechend den Lampenstrom negativ beeinflußt. Die aus der EP-A2-0740 492 bekannte Schaltungsanordnung, welche ebenfalls zuvor diskutiert worden ist, ermöglicht zwar eine Regelung bzw. Konstanthaltung der der Vollbrücke zugeführten Leistung, benötigt jedoch hierfür eine relativ große Anzahl von Bauelementen, so daß die Schaltungsanordnung relativ komplex und teuer ist.

Der vorliegenden Erfindung liegt daher die Aufgabe zugrunde, eine verbesserte Schaltungsanordnung zum Zünden bzw. Betreiben von Gasentladungslampen, insbesondere von Hochdruck-Gasentladungslampen, vorzuschlagen, welche die zuvor beschriebenen Probleme vermeidet. Insbesondere soll eine Schaltungsanordnung vorgeschlagen werden, die einerseits eine Konstanthaltung der der Lampe zugeführten Leistung ermöglicht, jedoch andererseits mit weniger Bauelementen als die aus der EP-A2-0740 492 bekannte Schaltungsanordnung auskommt und dementsprechend billiger zu realisieren ist. Darüber hinaus soll die erfindungsgemäße Schaltungsanordnung ein sicheres Zünden der Gasentladungslampe ermöglichen, weil insbesondere nach dem Zünden gewährleistet sein soll, daß der Lampenstrom nicht störend beeinflußt wird.

Die zuvor genannte Aufgabe wird gemäß der vorliegenden Erfindung durch eine Schaltungsanordnung mit Merkmalen der Ansprüche 1, 26 oder 29 gelöst. Die Unteransprüche beschreiben jeweils bevorzugte und vorteilhafte Ausführungsformen der vorliegenden Erfindung.

Gemäß Anspruch 1 wird die Gasentladungslampe analog zu dem bekannten Stand der Technik mit einer Vollbrückenschaltung derart betrieben, daß mit einer relativ niedrigen Frequenz zwischen den beiden Brückendiagonalen umgeschaltet wird, wobei jeweils die Schalter der einen Brückendiagonale ein- und die Schalter der anderen Brückendiagonale ausgeschaltet sind. Darüber hinaus wird zumindest ein Schalter der aktivierten Brückendiagonale mit einer relativ hohen Frequenz abwechselnd ein- und ausgeschaltet, wobei gemäß der vorliegenden Erfindung dieser hochfrequent geschaltete Schalter stets dann geschlossen wird, wenn der über den Brückenzweig der Vollbrücke fließende Zweigstrom ein Minimum, d.h. einen unteren Umkehrpunkt erreicht hat. Das Öffnen dieses hochfrequent geschalteten Schalters kann beliebig gewählt werden, wobei der Zeitpunkt des Öffnens insbesondere die der Gasentladungslampe zugeführte Leistung regelt. Das Einschalten des hochfrequent geschalteten Schalters im unteren Umkehrpunkt des über den Brückenzweig fließenden Stromes, der insbesondere in der Nähe des Stromwerts Null liegt, ermöglicht. daß der jeweils hochfrequent geschaltete Schalter geschont wird, da ihm zu diesem Zeitpunkt nahezu die Leistung Null zugeführt wird. Des weiteren können aufgrund dieser Maßnahme als steuerbare Schalter der Vollbrücke auch Feldeffekttransistoren mit integrierten Freilaufdioden verwendet werden, bei denen eine relativ lange Zeitspanne benötigt wird, um die Elektronen aus der Sperrschicht der jeweiligen Freilaufdiode auszuräumen. Derartige Feldeffekttransistoren sind jedoch bedeutend billiger als ebenfalls auf dem Markt erhältliche Feldeffekttransistoren mit relativ kurzen Ausräumzeiten, wie z.B. IGBTs. so daß die erfindungsgemäße Schaltungsanordnung mit billigeren Bauelementen auskommt. Entsprechend einer Weiterbildung der Erfindung kann das Absenken des im Brückenzweig fließenden Stromes teilweise beschleunigt werden, indem neben dem hochfrequent geschalteten Schalter auch der zweite Schalter der aktivierten Brückendiagonale nach einem vorgegebenen Zeitraum geöffnet wird.

Die Überwachung des im Brückenzweig der Vollbrücke fließenden Zweigstroms erfolgt insbesondere mit Hilfe einer in den Brückenzweig geschalteten Induktivität, die Bestandteil eines Serienresonanzkreises ist, der im Brückenzweig mit der zu steuernden Gasentladungslampe gekoppelt ist. Durch eine induktive Kopplung mit dieser Induktivität kann der untere Umkehrpunkt des Zweigstroms bestimmt werden. Die momentane Höhe des durch diese Induktivität fließenden Zweigstroms kann über einen Shunt-Widerstand bestimmt werden, der mit der Vollbrücke gekoppelt ist.

Nach dem Zünden und vor dem Normalbetrieb der Gasentladungslampe wird gemäß Anspruch 26 eine Aufwärmphase durchgeführt. Es ist eine bekannte Eigenschaft von Hochdruck-Gasentladungslampen, daß diese bis zur vollständigen Erwärmung auf Betriebstemperatur ein relativ schlecht kontrollierbares und instabiles Verhalten aufweisen. Die vollständige Erwärmung tritt etwa nach ein bis zwei Minuten ein. In der Erwärmungsphase (mit einer Lampenspannung von ca. 20 Volt) ist die an der Gasentladungslampe anliegende Spannung geringer als im Normalbetrieb (mit einer Lampenspannung von ca.80 - 90 Volt). Würde das elektronische Vorschaltgerät bzw. die Schaltungsanordnung in der Aufwärmphase wie im Normalbetrieb betrieben werden, hätte dies zur Folge, daß ein geringerer Lampenstrom über die im Brückenzweig befindliche Induktivität fließt, so daß ggf. keine zuverlässige Aussage über den zuvor erwähnten Zweigstrom getroffen werden kann. Aus diesem Grunde wird gemäß der vorliegenden Erfindung vorgeschlagen, während der Aufwärmphase die Schalter der beiden Brückendiagonalen hochfrequent ein- und auszuschalten. Nach Abschluß der Aufwärmphase wird dann in den zuvor beschriebenen Normalbetrieb umgeschaltet.

Zum Zünden der Gasentladungslampe wird gemäß Anspruch 29 vorgeschlagen, zwei miteinander gekoppelte Schalter, die in unterschiedlichen Brückendiagonalen der Vollbrücke angeordnet sind, zu öffnen, während die anderen Schalter abwechselnd hochfrequent geöffnet und geschlossen werden. Diese hohe Frequenz, mit der die beiden zuletzt genannten Schalter abwechselnd geöffnet und geschlossen werden, wird insbesondere derart gewählt, daß sie in der Nähe der Resonanzfrequenz des im Brückenzweig der erfindungsgemäßen Schaltungsanordnung angeordneten Serienresonanzkreises liegt, so daß die anzusteuernde Gasentladungslampe sicher zünden kann. Auch bei der vorliegenden Erfindung kommt ein Spartransformatorprinzip zum Einsatz, wobei jedoch hierzu die Induktivität des Serienresonanzkreises verwendet wird und die Kapazität des Serienresonanzkreises an einen Anzapfungspunkt dieser Induktivität angreift. Auf diese Weise wird die an der einen Spulenhälfte abfallende Spannung auf die lampenseitige Spulenhälfte hochtransformiert, so daß eine erhöhte Zündspannung für die Gasentladungslampe realisiert werden kann.

Während des zuvor beschriebenen niederfrequenten Betriebs der Schaltungsanordnung, der beispielsweise bei Schaltfrequenzen zwischen 80 - 150 Hz erfolgt, entsteht zwangsläufig ein Brummen. Das Brummen mit dieser niedrigen Frequenz ist an sich relativ leise und nicht sehr störend. Störend wirken sich dagegen die Oberwellen aus, die durch die steilen Flanken an den Umschaltzeitpunkten erzeugt werden. Aus diesem Grunde wird gemäß einem bevorzugten Ausführungsbeispiel vorgeschlagen, diese Umschaltflanken flacher auszugestalten, wobei dies insbesondere durch eine Reduzierung der Stromspitzen des im Brückenzweig fließenden Zweigstroms vor und nach dem Umschalten realisiert wird. Diese Reduzierung der Stromspitzen kann beispielsweise durch hard- oder softwaremäßige Anpassung der Steuerschaltung der Schaltungsanordnung durchgeführt werden.

Die vorliegende Erfindung wird nachfolgend anhand bevorzugter Ausführungsbeispiele unter Bezugnahme auf die beigefügte Zeichnung näher beschrieben.
Fig. 1 zeigt ein Schaltbild einer erfindungsgemäßen Schaltungsanordnung gemäß einem bevorzugten Ausführungsbeispiel der vorliegenden Erfindung,
Fig. 2a zeigt ein erstes Diagramm, welches zeitabhängige Spannungs- und Stromverläufe in der in Fig. 1 dargestellten Schaltungsanordnung darstellt,
Fig. 2b zeigt ein zweites Diagramm, welches den zeitabhängigen Stromverlauf und Schaltzustände in der in Fig. 1 dargestellten Schaltungsanordnung entsprechend einer Weiterbildung darstellt,
Fig. 3 zeigt ein elektronisches Vorschaltgerät, bei dem die in Fig. 1 gezeigte Schaltungsanordnung eingesetzt ist,
Fig. 4 zeigt eine Schaltungsanordnung gemäß dem bekannten Stand der Technik, und
Fig. 5 zeigt eine weitere Schaltungsanordnung gemäß dem bekannten Stand der Technik.

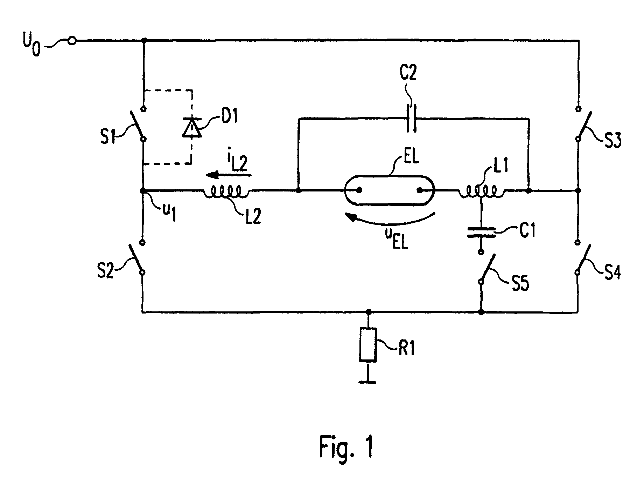

Die in-Fig. 1 gezeigte Schaltungsanordnung umfaßt steuerbare Schalter S1 - S4, die zu einer Vollbrücke verschaltet sind. An die Vollbrücke ist eine Gleichspannung U₀ angelegt, die von einer geeigneten Gleichspannungsquelle des entsprechenden elektronischen Vorschaltgeräts, in dem die Schaltungsanordnung verwendet wird, stammt. Zu den Schaltern S1 - S4 sind jeweils Freilaufdioden parallel geschaltet, wobei der Einfachheit halber in Fig. 1 lediglich die dem Schalter S1 parallel geschaltete Freilaufdiode D1 dargestellt ist. Als Schalter S1 - S4 werden vorzugsweise Feldeffekttransistoren verwendet, die die Freilaufdioden bereits enthalten. In dem Brückenzweig der in Fig. 1 gezeigten Vollbrücke ist eine anzusteuernde Gasentladungslampe EL, insbesondere eine Hochdruck-Gasentladungslampe, angeordnet. Die in Fig. 1 gezeigte Schaltungsanordnung ist insbesondere für den Betrieb von Metallhalogen-Hochdruck-Gasentladungslampen geeignet, die besonders hohe Zündspannungen benötigen. Wie bereits eingangs erwähnt worden ist, unterscheiden sich Hochdruck-Gasentladungslampen von Niederdruck-Gasentladungslampen insbesondere dadurch, daß sie höhere Zündspannungen benötigen und in ihrem kleineren Lampenkörper ein höherer Druck auftritt. Des weiteren weisen Hochdruck-Gasentladungslampen eine höhere Leuchtdichte auf, wobei sich jedoch die Farbtemperatur der jeweiligen Hochdruck-Gasentladungslampe mit der zugeführten Leistung ändert. Elektronische Vorschaltgeräte für Hochdruck-Gasentladungslampen sollten daher einerseits hohe Zündspannungen bereitstellen und andererseits eine Konstanthaltung der zugeführten Leistung ermöglichen.

Mit dem Brückenzweig der in Fig. 1 dargestellten Vollbrücke ist ein Serienresonanzkreis gekoppelt, der eine Induktivität L1 und eine Kapazität C1 umfaßt, wobei die Kapazität C1 an einen Anzapfungspunkt der Induktivität L1 angreift und über einen weiteren steuerbaren Schalter S5 parallel zu dem Schalter S4 geschaltet ist. Darüber hinaus ist eine Glättungs- oder Filterschaltung vorgesehen, die eine weitere Induktivität L2 und eine weitere Kapazität C2 aufweist, wobei diese Bauelemente wie in Fig. 1 gezeigt verschaltet sind. An die Vollbrücke ist zudem ein Widerstand R1 angeschlossen, der als Strommeß- oder Shunt-Widerstand dient.

Der zuvor erwähnte Serienresonanzkreis mit der Induktivität L1 und der Kapazität C1 dient in Kombination mit der weiteren Kapazität C2 insbesondere zum Zünden der Gasentladungslampe EL. Zu diesem Zweck wird der Serienresonanzkreis in Resonanz angeregt, d.h. eine der Resonanzfrequenz entsprechende Frequenz der Lampe zugeführt. Die Anregung des Resonanzkreises erfolgt durch abwechselndes Schalten der Schalter S3 und S4. Dies soll nachfolgend näher erläutert werden.

Zum Zünden der Gasentladungslampe EL werden zwei unmittelbar in Serie geschaltete Schalter, beispielsweise die Schalter S1 und S2, mit Hilfe einer geeigneten Steuerschaltung geöffnet und der Schalter S5, der sich in Serie mit der Kapazität C1 befindet, geschlossen. Die anderen beiden Schalter, beispielsweise die Schalter S3 und S4, der Vollbrücke werden abwechselnd geöffnet und geschlossen, wobei dies mit einer relativ hohen Frequenz (ca. 150 kHz) erfolgt. Die Schaltfrequenz wird langsam in Richtung auf die Resonanzfrequenz des durch die Induktivität L1 und die Kapazität C1 gebildeten Serienresonanzkreises abgesenkt. Die Zündspannung der Gasentladungslampe EL wird in der Regel bereits vor Erreichen der Resonanzfrequenz erreicht. In diesem Fall wird die Schaltfrequenz für die Schalter S3 und S4 auf dieser Frequenz gehalten bis die Lampe EL zündet. Die an der rechten Hälfte von L1 abfallende Spannung wird aufgrund des durch die Induktivität L1 realisierten Spartransformatorprinzips beispielsweise im Verhältnis 1:15 auf die linke Hälfte, die mit der Gasentladungslampe EL gekoppelt ist, hochtransformiert, wobei die an der linken Hälfte der Induktivität L1 auftretende Spannung die tatsächliche Zündspannung für die Gasentladungslampe EL bildet, die über die Kapazität C2 an die Lampe angelegt wird. Um das Zünden der Gasentladungslampe EL zu erfassen, wird die an dem Anzapfungspunkt der Induktivität L1 abfallende Spannung gemessen, welche proportional zur Zünd- bzw. Lampenspannung UEL ist, da nach dem Zünden der Lampe EL diese dämpfend auf den Serienresonanzkreis einwirkt. Nach erfolgter Zündung der Gasentladungslampe EL wird der Schalter S5 für den nachfolgenden Normalbetrieb geöffnet.

Ergänzend ist zu bemerken, daß der Schalter S5 für die Funktionsfähigkeit der erfindungsgemäßen Schaltungsanordnung nicht unbedingt erforderlich ist. Vielmehr könnte der Schalter S5 auch nach erfolgter Zündung der Gasentladungslampe EL geschlossen bleiben oder grundsätzlich durch eine entsprechende Überbrückung ersetzt sein. Mit Hilfe des Schalters S5, der nach erfolgter Zündung der Gasentladungslampe EL geöffnet wird, ist jedoch ein saubererer Betrieb der Gasentladungslampe EL möglich. Des weiteren ist zu bemerken, daß die Zündspule L1 insbesondere derart ausgelegt ist, daß sie im nachfolgend noch näher erläuterten Normalbetrieb in der Sättigung arbeitet und somit den Rest der Schaltung nicht beeinflußt. Dies kann beispielsweise dadurch erreicht werden, daß als Zündspule L1 eine Spule mit einem Eisenkern verwendet wird, der im Normalbetrieb in der Sättigung betrieben wird. so daß die Spule L1 nach dem Zünden der Gasentladungslampe EL im Normalbetrieb lediglich eine vernachlässigbare Induktivität bildet. Im Normalbetrieb ist somit lediglich die ebenfalls im Brückenzweig vorgesehene Induktivität L2 strombegrenzend wirksam.

Nachfolgend soll der nach dem Zünden der Gasentladungslampe EL initiierte Normalbetrieb näher erläutert werden, wobei während des Normalbetriebs die erfindungsgemäße Schaltungsanordnung bzw. Vollbrücke in einem sog. Discontinuous-Modus betrieben wird. Prinzipiell wird die in Fig. 1 gezeigte Vollbrücke mit den steuerbaren Schaltern S1 - S4 auf an sich bekannte Art und Weise während des Normalbetriebs betrieben, d.h. die beiden Brückendiagonalen mit den Schaltern S1 und S4 bzw. S2 und S3 werden abwechselnd aktiviert und deaktiviert und somit die entsprechenden Schalter der beiden Brückendiagonalen abwechselnd bzw. komplementär zueinander ein- und ausgeschaltet, wobei zudem bei Aktivierung der Brückendiagonale mit den Schaltern S1 und S4 der Schalter S1 hochfrequent abwechselnd ein- und ausgeschaltet wird, während entsprechend bei Aktivierung der Brückendiagonale mit den Schaltern S2 und S3 der steuerbare Schalter S2 hochfrequent abwechselnd ein- und ausgeschaltet wird. D.h. die Vollbrücke wird mit einer relativ niedrigen Frequenz, die insbesondere im Bereich 80 - 150 Hz liegen kann, umgepolt, während der Schalter S1 oder S2 der jeweils aktivierten Brückendiagonale zudem hochfrequent, beispielsweise mit einer Frequenz von ca. 45 kHz, abwechselnd ein- und ausgeschaltet wird. Dieses hochfrequente Ein- und Ausschalten der Schalter S1 oder S2 erfolgt mit Hilfe eines hochfrequenten pulsweitenmodulierten Steuersignals einer entsprechenden Steuerschaltung, welches mit Hilfe der aus den Bauelementen L2 und C2 bestehenden Filter- oder Glättungsschaltung gesiebt wird, so daß an der Gasentladungslampe EL lediglich der lineare Mittelwert des über den Brückenzweig fließenden Zweigstroms i_{L2} anliegt. Mit Hilfe des pulsweitenmodulierten Steuersignals kann die der Vollbrücke zugeführte Leistung konstant gehalten werden, was - wie eingangs erwähnt worden ist - insbesondere für den Betrieb von Hochdruck-Gasentladungslampen wichtig ist. Der niederfrequente Anteil des der Gasentladungslampe El zugeführten Stroms wird durch Umschalten bzw. Umpolen der beiden Brückendiagonalen, d.h. durch Umschalten von S1 und S4 auf S2 und S3, erzeugt. Über den rechten Brückenzweig mit den Schaltern S3 und S4 wird in diesem Fall die Lampe EL niederfrequent auf die Versorgungsspannung U₀ oder auf Masse gelegt, so daß an den Anschlußklemmen der Lampe EL im wesentlichen lediglich der niederfrequente Anteil anliegt.

Gemäß dem zuvor erwähnten niederfrequenten Discontinuous-Modus wird der steuerbare Schalter S1 bzw. S2 der jeweils aktivierten Brückendiagonale immer dann geschlossen, wenn der über die Induktivität L2 fließende Zweigstrom i_{L2} sein Minimum erreicht hat. Mit "Minimum" wird dabei der untere Umkehrpunkt des Stroms i_{L2} verstanden, wobei dieses Minimum durchaus auch im leicht negativen Stromwertbereich liegen kann.

Zur Betrachtung des Stromverlaufs i_{L2} soll nachfolgend davon ausgegangen werden, daß zunächst die Brückendiagonale mit den Schaltern S2 und S3 aktiviert ist, während die Brückendiagonale mit den Schaltern S1 und S4 deaktiviert ist. D.h. die Schalter S2 und S3 sind geschlossen. während die Schalter S1 und S4 geöffnet sind. Zum Zeitpunkt des Schließens der Schalter S2 und S3 beginnt durch die Induktivität L2 ein Strom i_{L2} zu fließen, der gemäß einer Exponentialfunktion ansteigt, wobei im hier interessierenden Bereich ein quasi-linearer Anstieg des Stroms i_{L2} zu erkennen ist, so daß nachfolgend der Einfachheit halber von einem linearen Anstieg bzw. Abfall des Stroms i_{L2} gesprochen wird. Durch Öffnen des Schalters S2 wird dieser Strom i_{L2} unterbrochen, wobei - wie bereits erwähnt worden ist - der Schalter S2 insbesondere hochfrequent und unabhängig vom Schaltzustand des Schalters S3 abwechselnd geöffnet und geschlossen wird. Das Öffnen des Schalters S2 hat zur Folge, daß der Strom iL2 zwar vorerst über die Freilaufdiode D1 des geöffneten Schalters S1 in die gleiche Richtung weiter fließt, aber kontinuierlich abnimmt und sogar schließlich einen negativen Wert erreichen kann. Dies ist insbesondere solange der Fall bis die Elektronen aus der Sperrschicht der Freilaufdiode D1 ausgeräumt worden sind. Das Erreichen dieses unteren Umkehrpunktes des Strom i_{L2} wird überwacht und der Schalter S2 nach Erkennen dieses unteren Umkehrpunktes wieder geschlossen, so daß der Strom i_{L2} wieder ansteigt. D.h. daß hochfrequente Einschalten des Schalters S2 erfolgt immer dann, wenn der untere Umkehrpunkt des Stroms i_{L2} erreicht worden ist. Das Öffnen des Schalters S2 kann im Prinzip beliebig gewählt werden, wobei der Zeitpunkt des Öffnens des Schalters insbesondere entscheidend für die Leistungszufuhr der Gasentladungslampe EL ist, so daß durch geeignetes Einstellen des Öffnungszeitpunkts die der Lampe zugeführte Leistung geregelt bzw. konstant gehalten werden kann. Als Schaltkriterium kann hierfür beispielsweise die Zeit oder der Maximalwert des Zweigstroms i_{L2} herangezogen werden.

Durch die Maßnahme, daß der jeweils hochfrequent abwechselnd ein- und ausgeschaltete Schalter S1 bzw. S2 jeweils im unteren Umkehrpunkt des Stroms i_{L2}, d.h. in der Nähe des Stromwerts Null, wieder eingeschaltet wird, wird der jeweilige Feldeffekttransistor S1 bzw. S2 geschont, d.h. vor Zerstörung geschützt, und es können Feldeffekttransistoren als Schalter S1 bzw. S2 verwendet werden, die verhältnismäßig lange Ausräumzeiten für die entsprechende Freilaufdiode aufweisen. Dies soll nachfolgend näher erläutert werden.

Bevor der Schalter S2 geschlossen wird, liegt über ihm eine Spannung an, die im vorliegenden Fall ca. 400 Volt beträgt. Wird der Schalter S2 geschlossen, bricht diese Spannung zusammen. d.h. sie fällt sehr rasch von 400 Volt auf 0 Volt ab. Die besondere Eigenschaft eines Feldeffekttransistors ist es jedoch, daß der Strom bei Aktivierung des entsprechenden Feldeffekttransistors bereits zu fließen beginnt, ehe die entsprechende Spannung auf 0 Volt abgefallen ist. In diesem kurzen Zeitabschnitt zwischen Anstieg des für den Feldeffekttransistor fließenden Stroms und dem Erreichen der Spannung 0 Volt wird durch das Produkt des Stroms und der Spannung eine dem jeweiligen Feldeffekttransistor zugeführte Leistung gebildet, die den Feldeffekttransistor zerstören kann. Daher ist es vorteilhaft, den Feldeffekttransistor bei einem geringstmöglichen Stromfluß, insbesondere in der Nähe des Stromwerts Null, zu schalten.

Des weiteren ist zu beachten, daß der über die Induktivität L2 fließende Strom i_{L2} über die Freilaufdiode von D1 fließt, wenn der Schalter S1 offen ist und auch der Schalter S2 noch offen ist. Wird der Schalter S2 geschlossen und der Schalter S geöffnet, dauert es eine bestimmte Zeitspanne, bis die Elektronen aus der Sperrschicht der Freilaufdiode D1 ausgeräumt werden konnten. Während dieser Zeit ist der Feldeffekttransistor S1 praktisch in einem leitenden Zustand. Das bedeutet, daß der Feldeffekttransistor S2 während einer relativ kurzen Zeitspanne bis zum Ausräumen der Sperrschicht der Freilaufdiode D1, die dem Feldeffekttransistor S1 zugeordnet ist, an der vollen Betriebsspannung U₀, die ca. 400 Volt beträgt, anliegt, wodurch es ebenfalls zu der zuvor beschriebenen Überbelastung und ggf. sogar Zerstörung des Feldeffekttransistors S2 kommen kann. Aufgrund der zuvor vorgeschlagenen Vorgehensweise, nämlich dem Einschalten des Schalters S2 immer dann, wenn der über die Induktivität L2 fließende Strom i_{L2} sein Minimum erreicht hat, ist der zuvor anhand der Ausräumzeit des Schalters bzw. Feldeffekttransistors S beschriebene Effekt nahezu unbeachtlich, so daß für die Schalter S1 - S4 auch Feldeffekttransistoren verwendet werden können, die relativ lange Ausräumzeiten für die damit verbundenen Freilaufdioden aufweisen. Es gibt zwar bereits Schaltelemente mit sehr kurzen Ausräumzeiten, wie z. B. den sog. IGBT (Insulated Gate Bipolar Transistor), wobei diese Bauelemente jedoch sehr teuer sind. Mit Hilfe der vorliegenden Erfindung kann somit auf die Verwendung derartig teurer Bauelemente verzichtet werden.

Für die zuvor beschriebene Vorgehensweise ist erforderlich, daß der augenblickliche Wert des Stroms i_{L2} sowie der Zeitpunkt des Erreichens seines Umkehrpunkts bekannt ist. Der augenblickliche Wert des Stroms i_{L2} kann beispielsweise durch Messen der an dem Widerstand R1 abfallenden Spannung bestimmt werden. Der untere Umkehrpunkt des Stroms i_{L2} wird vorzugsweise durch eine transformatorisch an der Spule L2 abgegriffene Spannung bestimmt. Zu diesem Zweck kann eine (in Fig. 1 nicht dargestellte) Wicklung oder Spule transformatorisch mit der Spule L2 gekoppelt werden, die zu einer Differenzierung des über die Spule L2 fließenden Stroms i_{L2} führt und somit eine Aussage über den Umkehrpunkt des Stroms i_{L2} zuläßt.

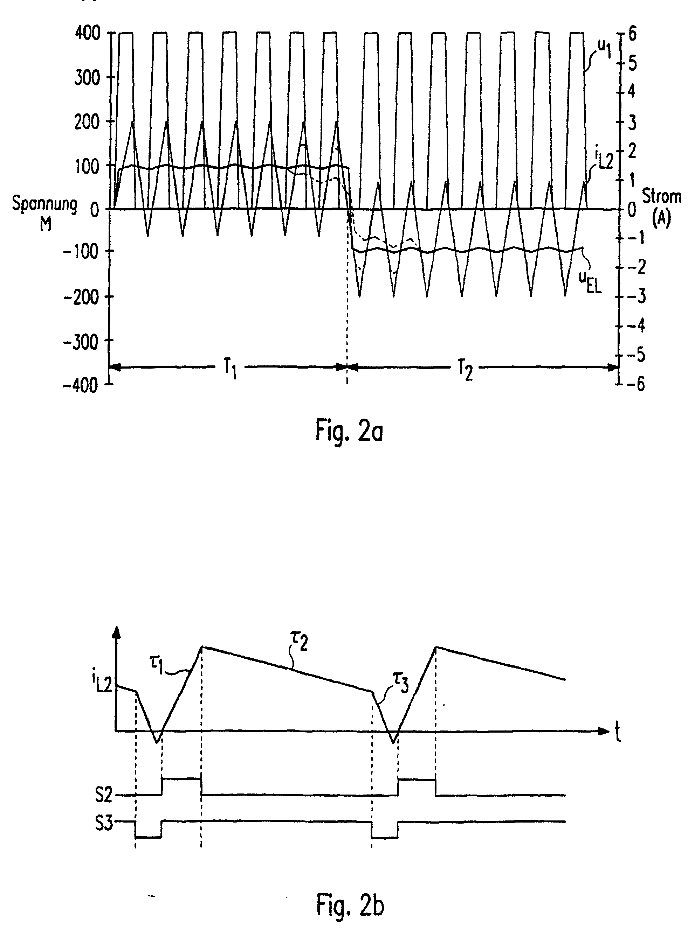

Der Normalbetrieb der in Fig. 1 gezeigten Schaltungsanordnung soll nachfolgend anhand des in Fig. 2 dargestellten Diagramms erläutert werden, wobei in Fig. 2 zeitabhängig der Verlauf der am Knotenpunkt zwischen den Schaltern S1 und S2 anliegenden Spannung u₁, der Lampenspannung u_{EL} und des über die Spule L2 fließenden Stroms i_{L2} dargestellt ist. Insbesondere ist in Fig. 2 der Fall dargestellt, daß während einer ersten Zeitspanne T₁ der in Fig. 1gezeigten Schaltungsanordnung die Brückendiagonale mit den Schaltern S2 und S3 aktiviert ist, wohingegen während einer anschließenden Zeitspanne T2 die Brückendiagonale mit den Schaltern S1 und S4 aktiviert ist. D.h. während der Zeitspanne T1 ist der Schalter S3 dauerhaft geschlossen, und die Schalter S1 und S4 sind dauerhaft geöffnet. Des weiteren wird während dieser Zeitspanne T1 der Schalter S2 hochfrequent abwechselnd ein- und ausgeschaltet. Aus Fig. 2 ist insbesondere ersichtlich, daß der Schalter S2 stets geschlossen wird, wenn der über die Spule L2 fließende Strom i_{L2} seinen unteren Umkehrpunkt, d.h. seinen minimalen Wert, erreicht hat, so daß sich der impulsartige Verlauf der Spannung u₁ ergibt. Die Steilheit der Flanken des Stroms i_{L2} ist durch die Induktivität der Spule L2 bestimmt. Durch Verändern des Spitzenwert des Stroms i_{L2}, d.h. des Zeitpunkts des Öffnens des Schalters S2, kann der Strommittelwert des Stroms i_{L2} verändert und somit die der Lampe EL zugeführte Leistung und deren Farbtemperatur geregelt bzw. konstant gehalten werden. Der hochfrequente Verlauf des Stroms i_{L2} wird durch die Bauelemente L2 und C2 geglättet, so daß sich der in Fig. 2 gezeigte geglättete Verlauf der an die Gasentladungslampe EL angelegten Spannung u_{EL} ergibt.

Nach Ablauf der Zeitspanne T₁ werden die Schalter S2 und S3 dauerhaft geöffnet, und der Schalter S4 wird dauerhaft eingeschaltet. Analog zum Schalter S2 während der Zeitspanne T1 wird nunmehr der Schalter S1 hochfrequent abwechselnd ein- und ausgeschaltet, so daß sich der in Fig. 2 gezeigte Verlauf der Spannungen u, und u_{EL} sowie des Stroms i_{L2} ergibt. Wie bereits erwähnt worden ist, wird mit Hilfe einer Steuerschaltung wiederholt zwischen den Betriebsphasen während der Zeitspannen T1 und T2 umgeschaltet, wobei diese Umpolfrequenz insbesondere im Bereich 80 - 150 Hz liegen kann, während die hochfrequente Taktfrequenz des Schalters S2 (während der Zeitspanne T₁) bzw. des Schalters S1 (während der Zeitspanne T₂) im Bereich um 45 kHz liegen kann.

Durch das niederfrequente Umschalten bzw. Umpolen zwischen den Brückendiagonalen S1 - S4 und S2 - S3 entsteht zwangsläufig ein Brummen, welches aufgrund seiner niedrigen Frequenz an sich relativ leise und nicht störend ist. Durch die steilen Flanken am Umschaltzeitpunkt zwischen den Zeitspannen T₁ und T₂ entstehen jedoch Oberwellen, die sich störend auswirken. Aus diesem Grunde ist die Steuerschaltung, welche die Schalter S1 - S4 ansteuert, vorteilhafter Weise derart auszugestalten, daß sie die Stromspitzen des Stroms i_{L2} vor und nach dem Umschalten zwischen den Betriebsphasen T₁ und T₂ reduziert. Dies kann beispielsweise durch eine spezielle Software oder durch eine spezielle Anpassung der Hardware der Steuerschaltung geschehen, die die letzten Stromspitzen während der Zeitspanne T₁ sowie die ersten Stromspitzen während der Zeitspanne T₂ reduziert, um auf diese Weise die Flanken beim Umschalten zwischen den Betriebsphasen T₁ und T₂ abzuflachen. In diesem Fall ergibt sich der in Fig. 2 gestrichelt dargestellte Verlauf des Stroms i_{L2} bzw. der Lampenspannung u_{EL}. Aus dieser gestrichelten Darstellung ist ersichtlich, daß vor und nach dem Umschaltzeitpunkt die Stromspitzen geringfügig gegenüber dem ursprünglichen Verlauf reduziert sind und somit ein etwas weicherer Übergang der Lampenspannung u_{EL} erzielt wird.

Bei der eben beschriebenen Steuerung läuft nach dem Öffnen des hochfrequent geschalteten Schalters der Strom weiter über die Freilaufdiode und nimmt dabei relativ langsam ab, wenn der zweite Schalter der gerade aktivierten Brückendiagonalen weiterhin geschlossen bleibt. Dies führt zu einem kleineren Stromspitzenwert und dementsprechend auch zu einer kleineren Verlustleistung. Allerdings kann es vorkommen, daß zu einem Zeitpunkt, zu dem die Elektronen aus den Sperrschichten der Freilaufdioden ausgeräumt worden sind und somit der untere Umkehrpunkt des Stromes i_{L2} erreicht worden ist, dieser noch nicht ausreichend abgefallen ist und somit die Schalter beim Schließen immer noch einer hohen Belastung ausgesetzt sind. Um diese Belastungen auszuschließen, können in einer Weiterbildung die Schalter entsprechend dem Diagramm in Fig. 2b gesteuert werden.

Dieses Diagramm zeigt den Stromverlauf i_{L2} und den Zustand des zweiten und des dritten Schalters 2. 3 während der Zeitspanne T₁. Die beiden anderen Schalter sind in diesem Zeitraum T₁ geöffnet. Während einer ersten Phase τ₁ sind beide Schalter geschlossen und der Strom i_{L2} steigt kontinuierlich an. Wie bei der eben beschriebenen Steuerung ist während einer zweiten Phase τ₂, deren Beginn durch das Erreichen eines Maximalwerts von i_{L2} oder durch eine vorgegebene Dauer von τ₁ bestimmt sein kann. der zweite Schalter S2 geöffnet und i_{L2} nimmt langsam ab. Zusätzlich wird nun allerdings ab einem vorgegebenen Zeitpunkt nach dem Öffnen des zweiten Schalters S2 in einer dritten Phase τ₃ auch der dritte Schalter S3 geöffnet. Der Strom fließt nun über die beiden Freilaufdioden des ersten und des vierten Schalters und nimmt nun stärker ab als während der zweiten Phase τ₂. Damit kann sichergestellt werden, daß i_{L2} auch tatsächlich einen negativen Wert erreicht, bevor die Sperrschichten der Freilaufdioden ausgeräumt sind. Erreicht i_{L2} den unteren Umkehrpunkt, werden beide Schalter wieder geschlossen und die Steuerung befindet sich wieder im Zustand der ersten Phase τ₁.

Das Öffnen des dritten Schalters S3 - also die dritte Phase τ₃ - entfällt allerdings, wenn der Strom i_{L2} vorher schon auf Null abgesunken ist, da in diesem Fall keine hohen Belastungen beim Öffnen Schalter auftreten. Statt dessen wird sofort mit der ersten Phase τ₁ fortgefahren und der zweite Schalter S2 wieder geöffnet. Das niederfrequente Umschalten zwischen den beiden Brückendiagonalen erfolgt analog zu dem vorherigen Ausführungsbeispiel, wobei auch hier vorteilhaft die Stromspitzen des Stroms i_{L2} vor und nach dem Umschalten zwischen den Betriebsphasen T₁ und T₂ reduziert werden können.

Es ist eine bekannte Eigenschaft von Hochdruck-Gasentladungslampen, daß diese bis zur vollständigen Erwärmung ein relativ schlecht kontrollierbares und instabiles Verhalten aufweisen. Die vollständige Erwärmung tritt dabei etwa nach 1 - 2 Minuten ein. In der Aufwärmphase kann die Spannung über der Lampe geringer als im Normalbetrieb sein. Würde man in der Aufwärmphase das Vorschaltgerät wie im zuvor beschriebenen Normalbetrieb betreiben, so würde die verringerte Lampenspannung zur Folge haben, daß ein Strom i_{L2} mit entsprechend geringer Steilheit di_{L2}/dt über die Induktivität L2 fließt, so daß ggf. der Umkehrpunkt von i_{L2} mit Hilfe des zuvor erwähnten transformatorischen Abgriffs nicht zuverlässig detektiert werden kann. Daher ist es vorteilhaft, während der Aufwärmphase, d.h. nach dem Zünden und vor dem eigentlichen Normalbetrieb, auch die Schalter S3 und S4 analog zu den Schaltern S1 und S2 hochfrequent zu takten, wobei niederfrequent zwischen den Brückendiagonalen S1 - S4 und S2 - S3 umgeschaltet wird, d.h. es wird niederfrequent zwischen zwei Zuständen umgeschaltet, wobei in dem ersten Zustand die Schalter S1 und S4 hochfrequent getaktet und die Schalter S2 und S3 geöffnet sind, während im zweiten Zustand die Schalter S2 und S3 hochfrequent getaktet und die Schalter S1 und S4 geöffnet sind. Durch diese Maßnahme wird erreicht, daß auch über die Freilaufdioden der Schalter S4 und S1 ein Strom über die Spule L2 fließt, wodurch in der transformatorisch mit dieser Spule L2 gekoppelten und in Fig. 1 nicht gezeigten Wicklung, die zur Erfassung des Umkehrpunkts des Stromes i_{L2} vorgesehen ist, eine höhere Spannung erzeugt wird, so daß eine sichere Erfassung oder Überwachung des Stroms i_{L2} möglich ist. Insbesondere kann der Umschaltzeitpunkt exakt überwacht werden. Der Wechsel von der Aufwärmphase in den Normalbetrieb erfolgt nach Erreichen der Betriebstemperatur der Lampe beispielsweise nach Überschreiten einer Schwelle (ca. 45V) durch die Lampenspannung, wobei bevorzugt bis zum tatsächlichen Umschalten noch eine bestimmte Zeitspanne zugewartet wird.

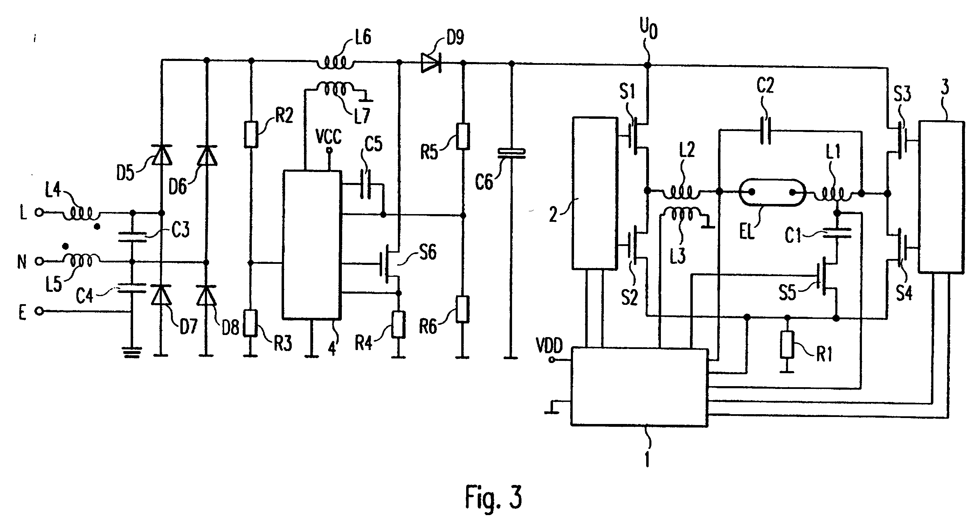

Fig. 3 zeigt den Einsatz der in Fig. 1 dargestellten Schaltungsanordnung gemäß der vorliegenden Erfindung in einem elektronischen Vorschaltgerät zum Betreiben von Gasentladungslampen, insbesondere von Hochdruck-Gasentladungslampen.

Eingangsseitig weist das elektronische Vorschaltgerät ein Funk-Entstörfilter mit einem Symmetriertransformator L4, L5 sowie Kondensatoren C3 und C4 auf, die an einen stromführenden Leiter L, einen Nullleiter und einen Erdleiter eines Versorgungsspannungsnetzes angeschlossen sind. Mit dem Funk-Entstörfilter ist ein Gleichrichter verbunden, der Dioden D5 - D8 umfaßt. An diesen Gleichrichter schließt sich eine Schaltung an, die als Hochsetzsteller fungiert und Widerstände R2 - R6. Kondensatoren C5 und C6, eine Diode D9 einen Transformator L6, L7, einen Feldeffekttransistor S6 sowie eine von einer Versorgungsspannung VCC versorgte integrierte Steuerschaltung 4 aufweist, welche insbesondere den Feldeffekttransistor S6, der als ein Schalter dient, mit Hilfe eines pulsweitenmodulierten Signals abhängig von der am Widerstand R3 abgegriffenen Spannung ansteuert. Auf diese Weise wird erreicht, daß die Zeiten, in denen der Transistor S6 leitend ist, während einer Netzhalbwelle so gesteuert werden, daß die Hüllkurve des aufgenommenen Stroms im wesentlichen sinusförmig ist. Diese Ausgangsspannung wird mit Hilfe der Diode D9 gleichgerichtet und mit Hilfe des Kondensators C6 gesiebt, so daß die bereits anhand Fig. 1 erläuterte Versorgungsgleichspannung U₀ für die zum Betreiben der Gasentladungslampe EL vorgesehene Schaltungsanordnung bereitgestellt wird. Ausgangsseitig umfaßt das in Fig. 3 gezeigte elektronische Vorschaltgerät die in Fig. 1 gezeigte Schaltungsanordnung, wobei die sich entsprechenden Bauteile mit identischen Bezugszeichen versehen sind, so daß auf eine Wiederholung der Beschreibung dieser Bauteile verzichtet werden kann. Ergänzend ist jedoch zu bemerken, daß in Fig. 3 auch die bereits zuvor erwähnte Wicklung L3 dargestellt ist, die mit der im Brückenzweig der Vollbrücke befindlichen Induktivität L2 transformatorisch gekoppelt ist und zur Detektierung des Umkehrpunkts des Stroms i_{L2} (vergl. Fig. 1) dient. Des weiteren ist in Fig. 3 die zentrale Steuerschaltung 1 dargestellt, welche von einer Versorgungsspannung VDD gespeist wird und einerseits mit Hilfe der Spule L3 den Umkehrpunkt des Stroms i_{L2} sowie mit Hilfe der am Widerstand R1 abgegriffenen Spannung die augenblickliche Höhe der Stroms i_{L2} erfaßt. Des weiteren überwacht diese Steuerschaltung 1, die insbesondere als anwenderspezifische integrierte Schaltung (Application Specific integrated Circuit, ASIC) ausgestaltet sein kann, die am Anzapfungspunkt der Spule L1 des Serienresonanzkreises anliegende Spannung, mit deren Hilfe das Zünden der Gasentladungslampe EL erfaßt werden kann. Die Ausgänge der Steuerschaltung 1 sind mit Brückentreibern 2 und 3 gekoppelt, die jeweils zur Ansteuerung der Feldeffekttransistoren S1 und S2 bzw. S3 und S4 dienen. Der ebenfalls als Schalter dienende Feldeffekttransistor S5, welcher in Serie mit der Resonanzkreiskapazität C1 geschaltet ist, wird direkt von der Steuerschaltung 1 angesteuert.

## Patentansprüche

1. Schaltungsanordnung zum Betreiben einer Gasentladungslampe,
mit einer Vollbrückenschaltung, an die eine Gleichspannung (U₀) angelegt ist und die vier steuerbare Schalter (S1 - S4) umfaßt,
wobei ein erster Schalter (S1) mit einem zweiten Schalter (S2) und ein dritter Schalter (S3) mit einem vierten Schalter (S4) jeweils in Serie geschaltet sowie der erste Schalter (S1) mit dem dritten Schalter (S3) und der zweite Schalter (S2) mit dem vierten Schalter (S4) verbunden sind, und wobei eine Gasentladungslampe (EL) in einem Brückenzweig, der einen Knotenpunkt zwischen dem ersten Schalter (S1) und dem zweiten Schalter (S2) mit einem Knotenpunkt zwischen dem dritten Schalter (S3) und dem vierten Schalter (S4) verbindet, anzuordnen ist, und
mit einer Steuerschaltung (1), die für einen Normalbetrieb der Gasentladungslampe mit einer ersten Frequenz abwechselnd zwischen einem ersten und einem zweiten Zustand (T₁, T₂) umschaltet, wobei während des ersten Zustands (T₁) der erste und vierte Schalter (S1, S4) geöffnet ist, der zweite Schalter (S2) mit einer zweiten Frequenz, die höher als die erste Frequenz ist, abwechselnd ein- und ausgeschaltet wird und der dritte Schalter (S3) mindestens dann geschlossen ist, wenn auch der zweite Schalter (S2) geschlossen ist, und wobei während des zweiten Zustands (T₂) der zweite und dritte Schalter (S2, S3) geöffnet ist, der erste Schalter (S1) mit der zweiten Frequenz abwechselnd ein- und ausgeschaltet wird und der vierte Schalter (S4) mindestens dann geschlossen ist, wenn auch der erste Schalter (S1) geschlossen ist,
**dadurch gekennzeichnet,**
**daß** die Steuerschaltung einen in dem Brückenzweig fließenden Zweigstrom (i_{L2}) überwacht und in dem ersten Zustand (T₁) den zweiten Schalter (S2) bzw. in dem zweiten Zustand (T₂) den ersten Schalter (S1) immer dann schließt, wenn der Zweigstrom (i_{L2}) einen minimalen Wert erreicht hat.

2. Schaltungsanordnung nach Anspruch 1,
**dadurch gekennzeichnet,**
**daß** im ersten Zustand (T₁) der dritte Schalter (S3) bzw. im zweiten Zustand (T₂) der vierte Schalter (S4) permanent geschlossen ist.

3. Schaltungsanordnung nach Anspruch 1,
**dadurch gekennzeichnet,**
**daß** die Steuerschaltung (1) im ersten Zustand (T₁) den dritten Schalter (S3) nach einem vorgegebenen Zeitraum nach dem Öffnen des zweiten Schalters (S2) bzw. im zweiten Zustand (T₂) den vierten Schalter (S4) nach einem vorgegebenen Zeitraum nach dem Öffnen des ersten Schalters (S1) ebenfalls öffnet. falls der Zweigstrom (i_{L2}) noch nicht auf Null abgesunken ist.

4. Schaltungsanordnung nach einem der Ansprüche 1-3.
**dadurch gekennzeichnet,**
**daß** die Steuerschaltung (1) im ersten Zustand (T₁) den zweiten Schalter (S2) bzw. im zweiten Zustand (T₂) den ersten Schalter (S1) wieder nach Ablauf einer vorgebbaren Zeitspanne oder nach Überschreiten eines Maximalwerts des Zweigstroms (i_{L2}) öffnet.

5. Schaltungsanordnung nach einem der vorherigen Ansprüche,
**dadurch gekennzeichnet,**
**daß** die Steuerschaltung (1) die Höhe des Zweigstroms (i_{L2}) durch Messen einer an einem mit der Vollbrücke gekoppelten Widerstand (R1) abfallenden Spannung erfaßt, und
**daß** die Steuerschaltung (1) einen dem minimalen Wert entsprechenden Umkehrpunkt des Zweigstroms (i_{L2}) durch Überwachen einer an einer Spule (L3) abfallenden Spannung erfaßt, wobei die Spule mit einer im Brückenzweig angeordneten weiteren Spule (L2) gekoppelt ist.

6. Schaltungsanordnung nach einem der vorherigen Ansprüche,
**dadurch gekennzeichnet,**
**daß** die Steuerschaltung (1) derart ausgestaltet ist, daß sie beim Umschalten zwischen dem ersten und zweiten Zustand (T₁, T₂) Stromspitzen des Zweigstroms (i_{L2}) reduziert.

7. Schaltungsanordnung nach Anspruch 6,
**dadurch gekennzeichnet,**
**daß** die Steuerschaltung (1) als Mikrocontroller ausgestaltet ist, wobei vor und nach dem Umschalten zwischen dem ersten und zweiten Zustand (T₁, T₂) auftretende Stromspitzen des Zweigstroms (i_{L2}) durch eine Software der Steuerschaltung (1) reduziert werden.

8. Schaltungsanordnung nach Anspruch 6,
**dadurch gekennzeichnet,**
**daß** die Steuerschaltung (1) als ASIC ausgestaltet ist, wobei vor und nach dem Umschalten zwischen dem ersten und zweiten Zustand (T₁, T₂) auftretende Stromspitzen des Zweigstroms (i_{L2}) durch die entsprechend angepaßte Hardware der Steuerschaltung (1) reduziert werden.

9. Schaltungsanordnung nach einem der vorhergehenden Ansprüche.
**dadurch gekennzeichnet,**
**daß** die Steuerschaltung (1) derart ausgestaltet ist, daß vor dem Normalbetrieb der Gasentladungslampe (EL) eine Aufwärmphase der Gasentladungslampe (EL) durchgeführt wird, wobei die Steuerschaltung (1) während der Aufwärmphase abwechselnd den ersten und zweiten Schalter (S1, S4) und dazu komplementär den zweiten und dritten Schalter (S2, S3) mit der ersten erste Frequenz ein- und ausschaltet.

10. Schaltungsanordnung nach einem der vorhergehenden Ansprüche.
**dadurch gekennzeichnet,**
**daß** die Steuerschaltung (1) derart ausgestaltet ist, daß vor dem Normalbetrieb der Gasentladungslampe (EL) ein Zündbetrieb durchgeführt wird, um die Gasentladungslampe (EL) zu zünden,
wobei die Steuerschaltung (1) während des Zündbetriebs den ersten und zweiten Schalter (S1, S2) öffnet und den dritten und vierten Schalter (S3, S4) abwechselnd mit einer Frequenz ein- und ausschaltet, die im wesentlichen der Resonanzfrequenz eines mit der Gasentladungslampe (EL) gekoppelten Serienresonanzkreises (L1, C1) entspricht.

11. Schaltungsanordnung nach Anspruch 10,
**dadurch gekennzeichnet,**
**daß** die Steuerschaltung (1) derart ausgestaltet ist, daß sie während des Zündbetriebs den dritten und vierten Schalter (S3, S4) zunächst mit einer höheren Frequenz als die Resonanzfrequenz des Serienresonanzkreises (L1, C1) ein- und ausschaltet und diese Frequenz anschließend in Richtung zur Resonanzfrequenz des Serienresonanzkreises (L1, C1) absenkt.

12. Schaltungsanordnung nach Anspruch 10 oder 11,
**dadurch gekennzeichnet,**
**daß** die Steuerschaltung (1) derart ausgestaltet ist, daß sie ein Zünden der Gasentladungslampe (EL) erfaßt und nach Erfassen der Zündung von dem Zündbetrieb in den Aufwärmbetrieb umschaltet.

13. Schaltungsanordnung nach Anspruch 11 oder 12,
**dadurch gekennzeichnet,**
**daß** die Steuerschaltung (1) derart ausgestaltet ist, daß sie nach der Erwärmung der Gasentladungslampe (EL) auf eine bestimmte Betriebstemperatur vom Aufwärmbetrieb in den Normaibetrieb umschaltet.

14. Schaltungsanordnung nach Anspruch 12 oder 13,
**dadurch gekennzeichnet,**
**daß** die Steuerschaltung (1) zum Erfassen der Zündung der Gasentladungslampe (EL) die Zündspannung (u_{EL}) oder eine davon abhängige Größe erfaßt.

15. Schaltungsanordnung nach Anspruch 14,
**dadurch gekennzeichnet,**
**daß** der Serienresonanzkreis eine in den Brückenzweig geschaltete Induktivität (L1) mit einer an einem Anzapfungspunkt daran angreifenden Kapazität (C1) umfaßt.

16. Schaltungsanordnung nach Anspruch 14 und 15,
**dadurch gekennzeichnet,**
**daß** die Steuerschaltung (1) zur Erfassung des Zündens der Gasentladungslampe (EL) die an dem Anzapfungspunkt zwischen der Kapazität (C1) und der Induktivität (L1) des Serienresonanzkreises abfallenden Spannung erfaßt.

17. Schaltungsanordnung nach Anspruch 15 oder 16,
**dadurch gekennzeichnet,**
**daß** die Kapazität (C1) des Serienresonanzkreises in Serie mit einem fünften steuerbaren Schalter (S5) und über die Induktivität (L1) des Serienresonanzkreises parallel zu dem vierten Schalter (S4) geschaltet ist, wobei die Steuerschaltung (1) im Zündbetrieb den fünften Schalter (S5) schließt und nach Erkennen des Zündens der Gasentladungslampe (EL) den fünften Schalter (S5) für den Aufwärmbetrieb bzw. Normalbetrieb der Gasentladungslampe (EL) öffnet.

18. Schaltungsanordnung nach einem der Ansprüche 15 - 17,
**dadurch gekennzeichnet,**
**daß** die Induktivität (L1) des Serienresonanzkreises derart dimensioniert ist, daß sie im Normalbetrieb in der Sättigung betrieben wird, so daß die Induktivität (L1) des Serienresonanzkreises im Normalbetrieb eine vernachlässigbare Induktivität bildet.

19. Schaltungsanordnung nach Anspruch 18,
**dadurch gekennzeichnet,**
**daß** die Induktivität (L1) des Serienresonanzkreises eine Spule mit einem Eisenkern umfaßt, der im Normalbetrieb gesättigt wird.

20. Schaltungsanordnung nach einem der vorhergehenden Ansprüche,
**dadurch gekennzeichnet,**
**daß** mit dem Brückenzweig der Vollbrücke (S1 - S4) eine Glättungsschaltung (L2, C2) gekoppelt ist, die dafür sorgt, daß an der Gasentladungslampe (EL) im wesentlichen nur ein Wechselspannungsanteil mit der niedrigeren ersten Frequenz anliegt.

21. Schaltungsanordnung nach Anspruch 20,
**dadurch gekennzeichnet,**
**daß** die Glättungsschaltung eine in Serie mit der Gasentladungslampe (EL) in dem Brückenzweig angeordnete Spule (L2) sowie einen zu der Gasentladungslampe (EL) parallel geschalteten Kondensator (C2) umfaßt.

22. Schaltungsanordnung nach Anspruch 21 und 5,
**dadurch gekennzeichnet,**
**daß** die Spule (L2) der Glättungsschaltung der zur Erfassung des Umkehrpunkts des Zweigstroms (i_{L2}) vorgesehenen Spule entspricht.

23. Schaltungsanordnung nach einem der vorhergehenden Ansprüche,
**dadurch gekennzeichnet,**
**daß** die steuerbaren Schalter (S1 - S4) der Vollbrückenschaltung Feldeffekttransistoren mit Freilaufdioden (D1) sind.

24. Schaltungsanordnung nach einem der vorhergehenden Ansprüche,
**dadurch gekennzeichnet,**
**daß** die Schaltungsanordnung derart dimensioniert ist, daß sie für den Betrieb einer Hochdruck-Gasentladungslampe (EL) geeignet ist.

25. Schaltungsanordnung nach einem der vorhergehenden Ansprüche,
**dadurch gekennzeichnet,**
**daß** die erste Frequenz im Bereich 80 - 150 Hz und die zweite Frequenz bei ca. 45 kHz liegt.

26. Schaltungsanordnung zum Betreiben einer Gasentladungslampe,
mit einer Vollbrückenschaltung, an die eine Gleichspannung (U₀) angelegt ist und die vier steuerbare Schalter (S1 - S4) umfaßt,
wobei ein erster Schalter (S1) mit einem zweiten Schalter (S2), und ein dritter Schalter (S3) mit einem vierten Schalter (S4) jeweils in Serie geschaltet sowie der erste Schalter (S1) mit dem dritten Schalter (S3) und der zweite Schalter (S2) mit dem vierten Schalter (S4) verbunden sind, und wobei die Gasentladungslampe (EL) in einem Brückenzweig, der einen Knotenpunkt zwischen dem ersten Schalter (S1) und dem zweiten Schalter (S2) mit einem Knotenpunkt zwischen dem dritten Schalter (S3) und dem vierten Schalter (S4) verbindet, anzuordnen ist, und
mit einer Steuerschaltung (1) die derart ausgestaltet ist, daß sie vor einem Normalbetrieb der Gasentladungslampe (EL) einen Aufwärmbetrieb zum Aufwärmen der Gasentladungslampe (EL) durchführt,
**dadurch gekennzeichnet,**
**daß** die Steuerschaltung (1) während des Aufwärmbetriebs abwechselnd mit einer ersten Frequenz zwischen einem ersten und zweiten Zustand (T₁, T₂) umschaltet,
wobei während des ersten Zustands (T₁) der erste und vierte Schalter (S1, S4) geöffnet sind und der zweite und dritte Schalter (S2, S3) zeitgleich miteinander mit einer zweiten Frequenz, die höher als die erste Frequenz ist, ein- und ausgeschaltet werden, und
wobei während des zweiten Zustands (T₂) der zweite und dritte Schalter (S2, S3) geöffnet sind und der erste und vierte Schalter (S1, S4) zeitgleich miteinander mit der zweiten Frequenz ein- und ausgeschaltet werden.

27. Schaltungsanordnung nach Anspruch 26,
**dadurch gekennzeichnet,**
**daß** die Steuerschaltung (1) im Aufwärmbetrieb den ersten und vierten Schalter (S1, S4) und dazu komplementär den zweiten und dritten Schalter (S2, S3) mit der ersten Frequenz umschaltet, wobei die erste Frequenz in der Größenordnung der normalen Betriebsfrequenz liegt, mit der im Normalbetrieb der Schaltungsanordnung zwischen dem ersten und vierten Schalter (S1, S4) einerseits und dem zweiten und dritten Schalter (S2, S3) andererseits umgeschaltet wird.

28. Schaltungsanordnung nach Anspruch 27,
**dadurch gekennzeichnet,**
**daß** die erste Frequenz, mit der die Steuerschaltung (1) im Aufwärmbetrieb abwechselnd zwischen dem ersten und zweiten Zustand (T₁, T₂) umschaltet, ca. 80-150 Hz beträgt.

29. Schaltungsanordnung zum Betreiben einer Gasentladungslampe,
mit einer Vollbrückenschaltung, an die eine Gleichspannung (Uo) angelegt ist und die vier steuerbare Schalter (S1 - S4) umfaßt,
wobei ein erster Schalter (S1) mit einem zweiten Schalter (S2) und ein dritter Schalter (S3) mit einem vierten Schalter (S4) jeweils in Serie geschaltet, sowie der erste Schalter (S1) mit dem dritten Schalter (S3) und der zweite Schalter (S2) mit dem vierten Schalter (S4) verbunden sind, und wobei die Gasentladungslampe (EL) in einem Brückenzweig, der einen Knotenpunkt zwischen dem ersten Schalter (S1) und dem zweiten Schalter (S2) mit einem Knotenpunkt zwischen dem dritten Schalter (S3) und dem vierten Schalter (S4) verbindet, anzuordnen ist, und
mit einer Steuerschaltung (1), die derart ausgestaltet ist, daß sie zum Zünden der Gasentladungslampe vor dem eigentlichen Normalbetrieb einen Zündbetrieb durchführt, wobei im Zündbetrieb die Vollbrücke von der Steuerschaltung (1) mit einer Frequenz betrieben wird, die in der Nähe der Resonanzfrequenz eines mit dem Brückenzweig der Vollbrücke gekoppelten Serienresonanzkreises (L1, C1) liegt,
**dadurch gekennzeichnet,**
**daß** die Steuerschaltung (1) derart ausgestaltet ist, daß sie im Zündbetrieb den ersten und zweiten Schalter (S1, S2) öffnet und den dritten und vierten Schalter (S3, S4) abwechselnd mit der in der Nähe der Resonanzfrequenz des Serienresonanzkreises (L1, C1) liegenden Frequenz ein- und ausschaltet.

30. Schaltungsanordnung nach Anspruch 29,
**dadurch gekennzeichnet,**
**daß** die Steuerschaltung (1) derart ausgestaltet ist, daß sie den dritten und vierten Schalter (S3, S4) zunächst mit einer höheren Frequenz als die Resonanzfrequenz des Serienresonanzkreises (L1, C1) abwechselnd ein- und ausschaltet und diese Frequenz nachfolgend in Richtung zu der Resonanzfrequenz hin absenkt.

31. Schaltungsanordnung nach Anspruch 29 und 30,
**dadurch gekennzeichnet,**
**daß** die Steuerschaltung (1) derart ausgestaltet ist, daß sie zum Erkennen des Zündens der Gasentladungslampe (EL) die an der Gasentladungslampe (EL) anliegende Spannung oder eine davon abhängige Größe erfaßt.

32. Schaltungsanordnung nach Anspruch 31,
**dadurch gekennzeichnet,**
**daß** der Serienresonanzkreis eine in den Brückenzweig geschaltete Induktivität (L1) und eine an einem Anzapfungspunkt der Induktivität (L1) angreifende Kapazität (C1) umfaßt, wobei die Steuerschaltung (1) zum Erkennen des Zündens der Gasentladungslampe (EL) die an dem Anzapfungspunkt abfallende Spannung erfaßt.

33. Schaltungsanordnung an Anspruch 32,
**dadurch gekennzeichnet,**
**daß** die Kapazität (C1) des Serienresonanzkreises mit einem fünften steuerbaren Schalter (S5) in Serie und über die Induktivität (L1) parallel zu dem vierten steuerbaren Schalter (S4) geschaltet ist. wobei die Steuerschaltung (1) im Zündbetrieb den fünften Schalter (S5) schließt und nach Erkennen des Zündens der Gasentladungslampe (EL) den fünften Schalter (S5) öffnet und einen Aufwärmbetrieb bzw. den Normalbetrieb der Schaltungsanordnung einleitet.

## Claims

1. Circuit arrangement for operating a gas discharge lamp, having a full-bridge circuit, to which a direct voltage (U₀) is applied and which comprises four controllable switches (S1 - S4),
in which a first switch (S1) is connected in series with a second switch (S2), and a third switch (S3) is connected in series with a fourth switch (S4), and in addition the first switch (S1) is connected to the third switch (S3), and the second switch (S2) is connected to the fourth switch (S4), and in which a gas discharge lamp (EL) is to be arranged in a bridge branch which connects a nodal point between the first switch (S1) and the second switch (S2) to a nodal point between the third switch (S3) and the fourth switch (S4), and
having a control circuit (1) which for normal operation of the gas discharge lamp alternately switches over between a first and a second state (T₁, T₂) at a first frequency, in which case during the first state (T₁) the first and fourth switches (S1, S4) are open, the second switch (S2) is switched on and off alternately at a second frequency which is higher than the first frequency, and the third switch (S3) is closed at least when the second switch (S2) is also closed, and in which case during the second state (T₂) the second and third switches (S2, S3) are open, the first switch (S1) is switched on and off alternately at the second frequency, and the fourth switch (S4) is closed at least when the first switch (S1) is also closed, **characterised in that** the control circuit monitors a branch current (i_{L2}) flowing in the bridge branch and in the first state (T₁) closes the second switch (S2) or in the second state (T₂) closes the first switch (S1) whenever the branch current (i_{L2}) has reached a minimum value.

2. Circuit arrangement according to claim 1, **characterised in that** in the first state (T₁) the third switch (S3) or in the second state (T₂) the fourth switch (S4) is permanently closed.

3. Circuit arrangement according to claim 1, **characterised in that** the control circuit (1) in the first state (T₁) after a predetermined period of time after the opening of the second switch (S2) also opens the third switch (S3) or in the second state (T₂) after a predetermined period of time after the opening of the first switch (S1) also opens the fourth switch (S4) if the branch current (i_{L2}) has not yet dropped to zero.

4. Circuit arrangement according to one of claims 1-3, **characterised in that** the control circuit (1) in the first state (T₁) opens the second switch (S2) again or in the second state (T₂) opens the first switch (S1) again at the end of a predeterminable time span or after a maximum value of the branch current (i_{L2}) has been exceeded.

5. Circuit arrangement according to one of the previous claims, **characterised in that** the control circuit (1) detects the level of the branch current (i_{L2}) by measuring a voltage that drops across a resistor (R1) coupled to the full bridge, and **in that** the control circuit (1) detects a reversal point of the branch current (i_{L2}) that corresponds to the minimum value by monitoring a voltage that drops across a coil (L3), with the coil being coupled to a further coil (L2) that is arranged in the bridge branch.

6. Circuit arrangement according to one of the previous claims, **characterised in that** the control circuit (1) is configured in such a way that it reduces current peaks of the branch current (i_{L2}) in the case of the switch-over between the first and the second state (T₁, T₂).

7. Circuit arrangement according to claim 6, **characterised in that** the control circuit (1) is configured as a microcontroller, with current peaks of the branch current (i_{L2}) that occur before and after the switch-over between the first and second state (T₁, T₂) being reduced by means of software of the control circuit (1).

8. Circuit arrangement according to claim 6, **characterised in that** the control circuit (1) is configured as an ASIC, with current peaks of the branch current (i_{L2}) that occur before and after the switch-over between the first and second state (T₁, T₂) being reduced by the correspondingly adapted hardware of the control circuit (1).

9. Circuit arrangement according to one of the preceding claims, **characterised in that** the control circuit (1) is configured in such a way that before normal operation of the gas discharge lamp (EL) a warm-up phase of the gas discharge lamp (EL) is effected, with the control circuit (1) during the warm-up phase alternately switching the first and second switch (S1, S4) and in a complementary manner thereto the second and third switch (S2, S3) on and off at the first first frequency.

10. Circuit arrangement according to one of the preceding claims, **characterised in that** the control circuit (1) is configured in such a way that before normal operation of the gas discharge lamp (EL) an igniting operation is carried out in order to ignite the gas discharge lamp (EL), with the control circuit (1) during the igniting operation opening the first and second switch (S1, S2) and switching the third and fourth switch (S3, S4) on and off alternately at a frequency that substantially corresponds to the resonant frequency of a series resonant circuit (L1, C1) coupled to the gas discharge lamp (EL).

11. Circuit arrangement according to claim 10, **characterised in that** the control circuit (1) is configured in such a way that during the igniting operation it switches the third and fourth switch (S3, S4) on and off firstly at a higher frequency than the resonant frequency of the series resonant circuit (L1, C1) and subsequently lowers this frequency in the direction of the resonant frequency of the series resonant circuit (L1, C1).

12. Circuit arrangement according to claim 10 or 11, **characterised in that** the control circuit (1) is configured in such a way that it detects ignition of the gas discharge lamp (EL) and after detection of the ignition switches over from the igniting operation to the warm-up operation.

13. Circuit arrangement according to claim 11 or 12, **characterised in that** the control circuit (1) is configured in such a way that after heating the gas discharge lamp (EL) to a specific operating temperature it switches over from the warm-up operation to normal operation.

14. Circuit arrangement according to claim 12 or 13, **characterised in that** the control circuit (1) detects the ignition voltage (u_{EL}) or a variable dependent thereon in order to detect the ignition of the gas discharge lamp (EL).

15. Circuit arrangement according to claim 14, **characterised in that** the series resonant circuit comprises an inductor (L1), which is connected into the bridge branch, with a capacitor (C1) that acts thereon at a tapping point.

16. Circuit arrangement according to claim 14 and 15, **characterised in that** the control circuit (1) detects the voltage that drops across the tapping point between the capacitor (C1) and the inductor (L1) of the series resonant circuit in order to detect the ignition of the gas discharge lamp (EL).

17. Circuit arrangement according to claim 15 or 16, **characterised in that** the capacitor (C1) of the series resonant circuit is connected in series with a fifth controllable switch (S5) and, by way of the inductor (L1) of the series resonant circuit, in parallel with the fourth switch (S4), with the control circuit (1) closing the fifth switch (S5) during the igniting operation and after identification of the ignition of the gas discharge lamp (EL) opening the fifth switch (S5) for the warm-up operation or normal operation of the gas discharge lamp (EL).

18. Circuit arrangement according to one of claims 15 - 17, **characterised in that** the inductor (L1) of the series resonant circuit is dimensioned in such a way that it is operated at saturation point during normal operation so that the inductor (L1) of the series resonant circuit establishes negligible inductance during normal operation.

19. Circuit arrangement according to claim 18, **characterised in that** the inductor (L1) of the series resonant circuit comprises a coil with an iron core that is saturated during normal operation.

20. Circuit arrangement according to one of the preceding claims, **characterised in that** coupled to the bridge branch of the full bridge (S1 - S4) there is a smoothing circuit (L2, C2) which ensures that substantially only an a.c. component at the lower first frequency is applied to the gas discharge lamp (EL).

21. Circuit arrangement according to claim 20, **characterised in that** the smoothing circuit comprises a coil (L2) which is arranged in series with the gas discharge lamp (EL) in the bridge branch and also a capacitor (C2) which is connected in parallel with the gas discharge lamp (EL).

22. Circuit arrangement according to claim 21 and 5, **characterised in that** the coil (L2) of the smoothing circuit corresponds to the coil that is provided for the detection of the reversal point of the branch current (i_{L2}).

23. Circuit arrangement according to one of the preceding claims, **characterised in that** the controllable switches (S1 - S4) of the full-bridge circuit are field-effect transistors with free-wheeling diodes (D1).

24. Circuit arrangement according to one of the preceding claims, **characterised in that** the circuit arrangement is dimensioned in such a way that it is suitable for the operation of a high-pressure gas discharge lamp (EL).

25. Circuit arrangement according to one of the preceding claims, **characterised in that** the first frequency lies in the range of 80 - 150 Hz and the second frequency lies at approximately 45 kHz.

26. Circuit arrangement for operating a gas discharge lamp, having a full-bridge circuit, to which a direct voltage (U₀) is applied and which comprises four controllable switches (S1 - S4),
in which a first switch (S1) is connected in series with a second switch (S2), and a third switch (S3) is connected in series with a fourth switch (S4), and in addition the first switch (S1) is connected to the third switch (S3), and the second switch (S2) is connected to the fourth switch (S4), and in which the gas discharge lamp (EL) is to be arranged in a bridge branch which connects a nodal point between the first switch (S1) and the second switch (S2) to a nodal point between the third switch (S3) and the fourth switch (S4), and
having a control circuit (1) which is configured in such a way that before normal operation of the gas discharge lamp (EL) it carries out a warm-up operation in order to warm up the gas discharge lamp (EL), **characterised in that** the control circuit (1) during the warm-up phase alternately switches over between a first and second state (T₁, T₂) at a first frequency, in which case during the first state (T₁) the first and fourth switch (S1, S4) are open and the second and third switch (S2, S3) are switched on and off at the same time together at a second frequency that is higher than the first frequency, and in which case during the second state (T₂) the second and third switch (S2, S3) are open and the first and fourth switch (S1, S4) are switched on and off at the same time together at the second frequency.

27. Circuit arrangement according to claim 26, **characterised in that** during the warm-up operation the control circuit (1) switches over the first and fourth switch (S1, S4) and in a complementary manner thereto the second and third switch (S2, S3) at the first frequency, with the first frequency lying in the order of magnitude of the normal operating frequency at which during normal operation of the circuit arrangement there is a switch-over between the first and fourth switch (S1, S4), on the one hand, and the second and third switch (S2, S3), on the other hand.

28. Circuit arrangement according to claim 27, **characterised in that** the first frequency, at which during the warm-up operation the control circuit (1) is switched over alternately between the first and second state (T₁, T₂), amounts to approximately 80 - 150 Hz.

29. Circuit arrangement for operating a gas discharge lamp, having a full-bridge circuit, to which a direct voltage (U₀) is applied and which comprises four controllable switches (S1 - S4),
in which a first switch (S1) is connected in series with a second switch (S2), and a third switch (S3) is connected in series with a fourth switch (S4), and in addition the first switch (S1) is connected to the third switch (S3), and the second switch (S2) is connected to the fourth switch (S4), and in which the gas discharge lamp (EL) is to be arranged in a bridge branch which connects a nodal point between the first switch (S1) and the second switch (S2) to a nodal point between the third switch (S3) and the fourth switch (S4), and
having a control circuit (1) which is configured in such a way that for the purpose of igniting the gas discharge lamp before the actual normal operation it carries out an igniting operation, in which case during the igniting operation the full bridge is operated by the control circuit (1) at a frequency that lies close to the resonant frequency of a series resonant circuit (L1, C1) that is coupled to the bridge branch of the full bridge, **characterised in that** the control circuit (1) is configured in such a way that during the igniting operation it opens the first and second switch (S1, S2) and switches the third and fourth switch (S3, S4) on and off alternately at the frequency that lies close to the resonant frequency of the series resonant circuit (L1, C1).

30. Circuit arrangement according to claim 29, **characterised in that** the control circuit (1) is configured in such a way that it switches the third and fourth switch (S3, S4) on and off alternately firstly at a higher frequency than the resonant frequency of the series resonant circuit (L1, C1) and subsequently lowers this frequency in the direction of the resonant frequency.

31. Circuit arrangement according to claim 29 and 30, **characterised in that** the control circuit (1) is configured in such a way that it detects the voltage that is applied to the gas discharge lamp (EL) or a variable dependent thereon in order to identify the ignition of the gas discharge lamp (EL).

32. Circuit arrangement according to claim 31, **characterised in that** the series resonant circuit comprises an inductor (L1) which is connected into the bridge branch and a capacitor (C1) that acts on a tapping point of the inductor (L1), with the control circuit (1) detecting the voltage that drops across the tapping point in order to identify the ignition of the gas discharge lamp (EL).

33. Circuit arrangement according to claim 32, **characterised in that** the capacitor (C1) of the series resonant circuit is connected in series with a fifth controllable switch (S5) and, by way of the inductor (L1), is connected in parallel with the fourth controllable switch (S4), with the control circuit (1) closing the fifth switch (S5) during the igniting operation and after identification of the ignition of the gas discharge lamp (EL) opening the fifth switch (S5) and initiating a warm-up operation or the normal operation of the circuit arrangement.

## Revendications

1. Dispositif de commutation pour faire fonctionner une lampe à décharge dans un gaz, avec une commutation à pont intégral à laquelle est appliquée une tension continue (U₀) et qui comprend quatre commutateurs commandables (S1-S4), un premier commutateur (S1) étant monté en série respectivement avec un deuxième commutateur (S2) et un troisième commutateur (S3) avec un quatrième commutateur (S4) et le premier commutateur (S1) étant relié au troisième commutateur (S3) et le deuxième commutateur (S2) étant relié au quatrième commutateur (S4) et une lampe à décharge dans un gaz (EL) devant être disposée dans une dérivation du pont, qui relie un point nodal entre le premier commutateur (S1) et le deuxième commutateur (S2) à un point nodal entre le troisième commutateur (S3) et le quatrième commutateur (S4), et à une commutation de commande (1) qui commute alternativement entre un premier et un deuxième état (T₁, T₂) pour un fonctionnement normal de la lampe à décharge dans un gaz à une première fréquence, les premier et quatrième commutateurs (S1, S4) étant ouverts au cours du premier état (T₁), le deuxième commutateur (S2) étant alternativement allumé et éteint à une deuxième fréquence qui est supérieure à la première fréquence et le troisième commutateur (S3) étant au moins ensuite fermé, quand le deuxième commutateur (S2) est également fermé, et les deuxième et troisième commutateurs (S2, S3) étant ouverts au cours du deuxième état (T₂), le premier commutateur (S1) étant alternativement allumé et éteint à la deuxième fréquence et le quatrième commutateur (S4) étant au moins ensuite fermé, quand le premier commutateur (S1) est également fermé, **caractérisé en ce que** la commutation de commande contrôle un courant dérivé (i_{L2}) circulant dans la dérivation du pont et ferme toujours dans le premier état (T₁) le deuxième commutateur (S2) ou dans le deuxième état (T₂) le premier commutateur (S1 quand le courant dérivé (i_{L2}) a atteint une valeur minimale.

2. Dispositif de commutation selon la revendication 1, **caractérisé en ce que**, dans le premier état (T₁), le troisième commutateur (S3) ou dans le deuxième état (T₂), le quatrième commutateur (S4) est fermé en permanence.

3. Dispositif de commutation selon la revendication 1, **caractérisé en ce que** la commutation de commande (1) ouvre également, dans le premier état (T₁), le troisième commutateur (S3) d'après une durée donnée suivant l'ouverture du deuxième commutateur (S2) ou, dans le deuxième état (T₂), le quatrième commutateur (S4) d'après une durée donnée suivant l'ouverture du premier commutateur (S1), si le courant dérivé (i_{L2}) n'est pas encore redescendu à zéro.

4. Dispositif de commutation selon l'une des revendications 1 à 3, **caractérisé en ce que** la commutation de commande (1) ouvre à nouveau, dans le premier état (T₁), le deuxième commutateur (S2) ou, dans le deuxième état (T₂), le premier commutateur (S1) une fois un certain temps écoulé ou une fois une valeur maximale du courant dérivé (i_{L2}) dépassée.

5. Dispositif de commutation selon l'une quelconque des revendications précédentes, **caractérisé en ce que** la commutation de commande (1) détecte le niveau du courant dérivé (i_{L2}) en mesurant une tension retombant sur une résistance (R1) couplée au pont intégral et que la commutation de commande (1) détecte un point d'inversion du courant dérivé (i_{L2}) correspondant à la valeur minimale en surveillant une tension retombant sur une bobine (L3), la bobine étant couplée à une autre bobine (L2) disposée dans la dérivation du pont.

6. Dispositif de commutation selon l'une quelconque des revendications précédentes, **caractérisé en ce que** la commutation de commande (1) est conçue de telle manière qu'elle réduit les pointes de courant du courant dérivé (i_{L2}) lors de la commutation entre le premier et le deuxième état (T₁, T₂).

7. Dispositif de commutation selon la revendication 6, **caractérisé en ce que** la commutation de commande (1) est conçue comme micro-controller, les pointes de courant du courant dérivé (i_{L2}) apparaissant avant et après la commutation entre le premier et le deuxième état (T₁, T₂) étant réduites par un logiciel de commutation de commande (1).

8. Dispositif de commutation selon la revendication 6, **caractérisé en ce que** la commutation de commande (1) est conçue comme ASIC, les pointes de courant du courant dérivé (i_{L2}) apparaissant avant et après la commutation entre le premier et le deuxième état (T₁, T₂) étant réduites par le matériel de la commutation de commande (1) adapté en conséquence.

9. Dispositif de commutation selon l'une quelconque des revendications précédentes **caractérisé en ce que** la commutation de commande (1) est conçue de telle manière que l'on réalise une phase de chauffage de la lampe à décharge dans un gaz (EL) avant le fonctionnement normal de la lampe à décharge dans un gaz (EL), la commutation de commande (1) allumant et éteignant alternativement les premier et quatrième commutateurs (S1, S4) et en plus, de manière complémentaire, les deuxième et troisième commutateurs (S2, S3) à la première fréquence au cours de la phase de chauffage.

10. Dispositif de commutation selon l'une quelconque des revendications précédentes, **caractérisé en ce que** la commutation de commande (1) est conçue de telle manière que l'on réalise un allumage avant le fonctionnement normal de la lampe à décharge dans un gaz (EL) pour allumer la lampe à décharge dans un gaz (EL), la commutation de commande (1) ouvrant les premier et deuxième commutateurs (S1, S2) au cours du fonctionnement de l'allumage et allumant et éteignant alternativement les troisième et quatrième commutateurs (S3, S4) à une fréquence qui correspond essentiellement à la fréquence de résonance d'un circuit accepteur (L1, C1) couplé à une lampe à décharge dans un gaz (EL).

11. Dispositif de commutation selon la revendication 10, **caractérisé en ce que** la commutation de commande (1) est conçue de telle manière qu'elle allume et éteint au cours du fonctionnement de l'allumage les troisième et quatrième commutateurs (S3, S4) d'abord à une fréquence supérieure à la fréquence de résonance du circuit accepteur (L1, C1) et abaisse ensuite finalement cette fréquence en direction de la fréquence de résonance du circuit accepteur (L1, C1).

12. Dispositif de commutation selon la revendication 10 ou 11, **caractérisé en ce que** la commutation de commande (1) est conçue de telle manière qu'elle détecte un allumage de la lampe à décharge dans un gaz (EL) et, après détection de l'allumage, commute de l'allumage au chauffage.

13. Dispositif de commutation selon la revendication 11 ou 12, **caractérisé en ce que** la commutation de commande (1) est conçue de telle manière qu'elle commute, après le chauffage de la lampe à décharge dans un gaz (EL) à une certaine température de fonctionnement, du chauffage au fonctionnement normal.

14. Dispositif de commutation selon la revendication 12 ou 13, **caractérisé en ce que** la commutation de commande (1) détecte la tension d'allumage (U_{EL}) ou une grandeur qui en dépend pour détecter l'allumage de la lampe à décharge dans un gaz (EL).

15. Dispositif de commutation selon la revendication 14, **caractérisé en ce que** le circuit accepteur comprend une inductance (L1) montée dans la dérivation de pont avec un capaciteur (C1) s'appliquant à un point de prise de réglage de celle-ci.

16. Dispositif de commutation selon la revendication 14 ou 15, **caractérisé en ce que** la commutation de commande (1) détecte la tension retombant à un point de prise de réglage entre le capaciteur (C1) et l'inductance (L1) du circuit accepteur pour détecter l'allumage de la lampe à décharge dans un gaz (EL).

17. Dispositif de commutation selon la revendication 15 ou 16, **caractérisé en ce que** le capaciteur (C1) du circuit accepteur est monté en série avec un cinquième commutateur commandable (S5) et, par le biais de l'inductance (L1) du circuit accepteur, en parallèle par rapport au quatrième commutateur (S4), la commutation de commande (1) fermant, dans le fonctionnement en mode allumage, le cinquième commutateur (S5) et ouvrant, après détection de l'allumage de la lampe à décharge dans un gaz (EL), le cinquième commutateur (S5) pour le chauffage ou le fonctionnement normal de la lampe à décharge dans un gaz (EL).

18. Dispositif de commutation selon l'une des revendications 15 à 17, **caractérisé en ce que** l'inductance (L1) du circuit accepteur est dimensionnée de telle manière qu'elle est exploitée en saturation au cours du fonctionnement normal, si bien que l'inductance (L1) du circuit accepteur en fonctionnement normal forme une inductance négligeable.

19. Dispositif de commutation selon la revendication 18, **caractérisé en ce que** l'inductance (L1) du circuit accepteur comprend une bobine dotée d'un noyau en fer qui est saturé en fonctionnement normal.

20. Dispositif de commutation selon l'une quelconque des revendications précédentes, **caractérisé en ce qu'**une commutation de lissage (L2.C2), qui veille à ce que seulement une partie de la tension alternative dotée essentiellement de la première fréquence la plus basse soit appliquée à la lampe à décharge dans un gaz (EL), est couplée à la dérivation de pont du pont intégral (S1 - S4).

21. Dispositif de commutation selon la revendication 20, **caractérisé en ce que** la commutation de lissage comprend une bobine (L2) disposée en série avec la lampe à décharge dans un gaz (EL) dans une dérivation de pont ainsi qu'un condensateur (C2) monté en parallèle par rapport à la lampe à décharge dans un gaz (C2).

22. Dispositif de commutation selon la revendication 21 et 5, **caractérisé en ce que** la bobine (L2) de la commutation de lissage correspond à la bobine prévue pour détecter le point d'inversion du courant dérivé (i_{L2}).

23. Dispositif de commutation selon l'une quelconque des revendications précédentes, **caractérisé en ce que** les commutateurs commandables (S1-S4) de la commutation à pont intégral sont des transistors à effet de champ dotés de diodes de roue libre (D1).

24. Dispositif de commutation selon l'une quelconque des revendications précédentes, **caractérisé en ce que** le dispositif de commutation est dimensionné de telle manière qu'il est approprié au fonctionnement d'une lampe à décharge dans un gaz haute pression (EL).

25. Dispositif de commutation selon l'une quelconque des revendications précédentes, **caractérisé en ce que** la première fréquence se situe dans une plage allant de 80 à 150 Hz et la deuxième fréquence à environ 45 Hz.

26. Dispositif de commutation pour faire fonctionner une lampe à décharge dans un gaz, avec une commutation à pont intégral, à laquelle est appliquée une tension continue (U₀) et qui comprend quatre commutateurs commandables (S1-S4), un premier commutateur (S1) étant monté en série avec un deuxième commutateur (S2) et un troisième commutateur (S3) avec un quatrième commutateur (S4) respectivement et le premier commutateur (S1) étant relié au troisième commutateur (S3) et le deuxième commutateur (S2) au quatrième commutateur (S4) et la lampe à décharge dans un gaz (EL) devant être disposée dans une dérivation de pont, qui relie un point nodal entre le premier commutateur (S1) et le deuxième commutateur (S2) à un point nodal entre le troisième commutateur (S3) et le quatrième commutateur (S4) et à une commutation de commande (1) qui est conçue de telle manière qu'elle réalise un chauffage pour chauffer la lampe à décharge dans un gaz (EL) avant un fonctionnement normal de la lampe à décharge dans un gaz (EL), **caractérisé en ce que** la commutation de commande (1) commute alternativement entre un premier et un deuxième état (T₁, T₂) au cours du chauffage à une première fréquence, les premier et quatrième commutateurs (S1, S4) étant ouverts au cours du premier état (T₁), les deuxième et troisième commutateurs (S2, S3) étant alternativement allumés et éteints ensemble simultanément à une deuxième fréquence qui est supérieure à la première fréquence et les deuxième et troisième commutateurs (S2, S3) étant ouverts au cours du deuxième état (T₂), les premier et troisième commutateurs (S1, S3) étant allumés et éteints ensemble simultanément à la deuxième fréquence.

27. Dispositif de commutation selon la revendication 26, **caractérisé en ce que** la commutation de commande (1) commute en fonctionnement en mode chauffage les premier et quatrième commutateurs (S1, S4) et en plus de manière complémentaire les deuxième et troisième commutateurs (S2, S3) à la première fréquence, la première fréquence se situant dans l'ordre de grandeur de la fréquence de fonctionnement normal avec laquelle on commute en fonctionnement normal de la commutation de commande entre les premier et quatrième'commutateurs (S1, S4) d'une part et les deuxième et troisième commutateurs (S2, S3) d'autre part.

28. Dispositif de commutation selon la revendication 27, **caractérisé en ce que** la première fréquence, avec laquelle la commutation de commande (1) commute alternativement, en fonctionnement en mode chauffage, entre le premier et le deuxième état (T₁, T₂), atteint environ 80 à 150 Hz.

29. Dispositif de commutation pour faire fonctionner une lampe à décharge dans un gaz, avec une commutation à pont intégral, à laquelle est appliquée une tension continue (U₀) et qui comprend quatre commutateurs commandables (S1-S4), un premier commutateur (S1 étant monté en série avec un deuxième commutateur (S2) et un troisième commutateur (S3) avec un quatrième commutateur (S4) respectivement et le premier commutateur (S1) étant relié au troisième commutateur (S3) et le deuxième commutateur (S2) au quatrième commutateur (S4) et la lampe à décharge dans un gaz (EL) devant être disposée dans une dérivation de pont, qui relie un point nodal entre le premier commutateur (S1) et le deuxième commutateur (S2) à un point nodal entre le troisième commutateur (S3) et le quatrième commutateur (S4) et à une commutation de commande (1) qui est conçue de telle manière qu'elle réalise un allumage pour allumer la lampe à décharge dans un gaz avant le fonctionnement normal proprement dit, le pont intégral étant actionné par la commutation de commande (1) en fonctionnement en mode d'allumage à une fréquence, qui se situe aux environs de la fréquence de résonance d'un circuit accepteur (L1, C1) couplé à une dérivation de pont du pont intégral, **caractérisé en ce que** la commutation de commande (1) est conçue de telle manière qu'elle ouvre les premier et deuxième commutateurs (S1, S2) en fonctionnement en mode d'allumage et allume et éteint alternativement les troisième et quatrième commutateurs (S3, S4) à la fréquence se situant aux environs de la fréquence de résonance du circuit accepteur (L1, C1).

30. Dispositif de commutation selon la revendication 29, **caractérisé en ce que** la commutation de commande (1) est conçue de telle manière qu'elle allume et éteint alternativement les troisième et quatrième commutateurs (S3, S4) d'abord à une fréquence supérieure à la fréquence de résonance du circuit accepteur (L1, C1) et abaisse ensuite cette fréquence en direction de la fréquence de résonance.

31. Dispositif de commutation selon la revendication 29 ou 30, **caractérisé en ce que** la commutation de commande (1) est conçue de telle manière qu'elle détecte la tension appliquée à la lampe à décharge dans un gaz (EL) ou une grandeur qui en dépend pour détecter l'allumage de la lampe à décharge dans un gaz (EL).

32. Dispositif de commutation selon la revendication 31,
**caractérisé en ce que** le circuit accepteur comprend une inductance (L1) montée dans la dérivation de pont et un capaciteur (C1) s'appliquant à un point de prise de réglage de l'inductance (L1), la commutation de commande (1) détectant la tension retombant à un point de prise de réglage pour détecter l'allumage de la lampe à décharge dans un gaz (EL).

33. Dispositif de commutation selon la revendication 32, **caractérisé en ce que** le capaciteur (C1) du circuit accepteur est monté en série avec un cinquième commutateur commandable (S5) et, par le biais de l'inductance (L1), en parallèle par rapport au quatrième commutateur (S4), la commutation de commande (1) fermant dans le fonctionnement en mode allumage le cinquième commutateur (S5) et ouvrant, après détection de l'allumages de la lampe à décharge dans un gaz (EL), le cinquième commutateur (S5) et induisant le fonctionnement en mode chauffage ou le fonctionnement normal du dispositif de commutation.
